# EUROPEAN PATENT APPLICATION

(11) **EP 4 804 630 A1**
(43) Date of publication of application: **09.09.2026**
(21) Application number: 24887767.2
(22) Date of filing: 24.10.2024
(51) Int. Cl.: H04W 48/08

(54) **COMMUNICATION METHOD AND APPARATUS**

(30) Priority: 10.11.2023 CN 202311505143
(71) Applicant: Huawei Technologies Co., Ltd., Shenzhen, Guangdong 518129 (CN)
(72) Inventor: CHEN, Ying, Shenzhen, Guangdong 518129 (CN); ZHANG, Peng, Shenzhen, Guangdong 518129 (CN); WANG, Jun, Shenzhen, Guangdong 518129 (CN)
(74) Representative: Körber, Martin Hans
(86) International application number: PCT/CN2024/127152
(87) International publication number: WO 2025/098154

(57) **Abstract**

Embodiments of this application provide a communication method and apparatus. In the method, a network device may send first information indicating a terminal device type whose access is allowed by the network device. In this way, after receiving the first information, a terminal device located within coverage of the network device may determine, based on the first information and a status of the terminal device, whether the terminal device is a terminal device whose access is allowed by the network device, thereby determining whether to access the network device, to avoid a case in which an access procedure initiated by the terminal device finally fails because the terminal device initiates the access procedure to the network device in a scenario in which the network device does not allow access. According to the method, the terminal device may select, based on the first information sent by the network device, an appropriate network device for access, to finally ensure that a terminal device in an NTN scenario can accurately access a network device, thereby improving an access success rate, and reducing power consumption of the terminal device.

## Description

### CROSS-REFERENCE TO RELATED APPLICATIONS

This application claims priority to Chinese Patent Application No. 202311505143.3, filed with the China National Intellectual Property Administration on November 10, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Compared with a conventional terrestrial network (for example, a 4th generation (4th Generation, 4G) mobile communication system or a 5th generation (5th Generation, 5G) mobile communication system), a non-terrestrial network (Non-terrestrial network, NTN) has features such as wider coverage, a higher speed, and lower costs. In particular, in places in which the terrestrial network cannot be directly deployed, for example, oceans, deserts, or airspace, the non-terrestrial network can be used as a supplement or an extension of the terrestrial network, to achieve a purpose of wide-area seamless coverage, and effectively resolve a problem of internet access in regions with a scarce communication infrastructure.

As a typical example of the NTN, satellite communication has features such as a long communication distance, a large coverage area, and flexible networking, and plays an irreplaceable role in fields such as space communication, aeronautical communication, military communication, emergency and disaster relief communication, and high-speed movement. The satellite communication is introduced into a conventional communication system, and a base station or some functions of the base station are deployed on a satellite. This not only can provide seamless coverage for a terminal device, but also can avoid impact of natural disasters and ensure reliability of the communication system.

Currently, different countries or regions have different laws and regulations on high-frequency-band communication in an NTN scenario. The laws and regulations specify types of a network device and the terminal device in the NTN, a specific frequency band used, and the like. However, the 3rd generation partnership project (3rd generation partnership project, 3GPP) currently does not discuss the laws and regulations that a device in the NTN scenario complies with. In addition, the laws and regulations of the different countries or regions also vary with communication development, and types, forms, and services of the terminal device are also richer. This greatly restricts access of the terminal device, and further affects service implementation of the terminal device.

### SUMMARY

This application provides a communication method and apparatus, to ensure that a terminal device in an NTN scenario can access a network device.

According to a first aspect, an embodiment of this application provides a communication method. The method may be applied to a network device. The network device herein may be the network device, or may be a processor, a module, a chip, a chip system, or the like that is in the network device and that implements the method. The method includes the following step.

The network device sends first information, where the first information indicates a terminal device type whose access is allowed by the network device, the terminal device type whose access is allowed by the network device includes a fixed-terminal-device type and/or a mobile-terminal-device type, and the network device is a network device used in a non-terrestrial network NTN.

In the method, the network device may send the first information indicating the terminal device type whose access is allowed by the network device. In this way, after receiving the first information, a terminal device located within coverage of the network device may determine, based on the first information and a status of the terminal device, whether the terminal device is a terminal device whose access is allowed by the network device, thereby determining whether to access the network device, to avoid a case in which an access procedure initiated by the terminal device finally fails because the terminal device initiates the access procedure to the network device in a scenario in which the network device does not allow access. According to the method, the terminal device may select, based on the first information sent by the network device, an appropriate network device for access, to finally ensure that a terminal device in an NTN scenario can accurately access a network device, thereby improving an access success rate, and reducing power consumption of the terminal device.

In a possible design, the network device may broadcast the first information, so that the terminal device within the coverage of the network device can receive the first information. For example, the network device may send the first information via a system message (for example, a master information block (master information block, MIB) or a system information block (system information block, SIB)) through broadcast.

In a possible design, the mobile-terminal-device type includes a plurality of mobile terminal device subtypes; and when the terminal device type whose access is allowed by the network device includes the mobile-terminal-device type, the first information further indicates at least one mobile terminal device subtype whose access is allowed by the network device.

According to the design, the network device may notify, by using the first information, the terminal device within the coverage of at least one sub mobile terminal device whose access is allowed by the network device, so that a terminal device that is of the mobile-terminal-device type and whose mobile terminal device subtype is included in the at least one sub mobile terminal device whose access is allowed by the network device can initiate an access procedure to the network device.

In a possible design, the mobile-terminal-device type is an earth station in motion ESIM, and the plurality of mobile terminal device subtypes are: an aeronautical ESIM, a maritime ESIM, and a land ESIM.

In a possible design, when the terminal device type whose access is allowed by the network device includes the fixed-terminal-device type, the first information further indicates that a determining condition of the fixed-terminal-device type is satisfied.

According to the design, the network device may notify, by using the first information, the terminal device within the coverage of the determining condition of the fixed-terminal-device type whose access is allowed by the network device, so that a terminal device that is of the fixed-terminal-device type and that satisfies the determining condition can initiate an access procedure to the network device.

In a possible design, the determining condition includes any one of the following:

A location of a terminal device is fixed;
a terminal device moves within a specified geographical range;
a terminal device moves at a specified quantity of geographical locations; or
a terminal device moves at a specified quantity of geographical locations, and a distance between any two geographical locations in the specified quantity of geographical locations is less than a specified distance threshold.

In a possible design, the fixed-terminal-device type is a fixed-satellite service FSS terminal device.

In a possible design, the first information further indicates a service whose implementation is allowed by the network device.

According to the design, the network device may notify, by using the first information, the terminal device within the coverage of the service whose implementation is allowed by the network device, so that the terminal device can determine, based on a service to be implemented by the terminal device and the service whose implementation is allowed by the network device, whether to initiate an access procedure to the network device.

In a possible design, the network device may further receive a radio resource control RRC connection setup request message from a first terminal device, where the RRC connection setup request message includes at least one of the following: second information or third information, the second information indicates a type of the first terminal device, the third information indicates an antenna configuration of the first terminal device, and the type of the first terminal device is the fixed-terminal-device type or the mobile-terminal-device type; and send an RRC connection setup complete message to the first terminal device.

According to the design, after randomly accessing the network device, a terminal device may report a type of the terminal device or an antenna configuration of the terminal device to the network device by using an RRC connection setup procedure, so that the network device can determine, based on these pieces of information, whether to allow continued access of the terminal device, to avoid a case in which an RRC connection failure of the terminal device is finally caused because of a continuation of the RRC connection setup procedure in a scenario in which the network device does not allow the access or cannot provide a service.

In a possible design, when the RRC connection setup request message includes the third information, the network device may further determine, based on the third information, beam information of the first terminal device and/or information about a service serviceable for the first terminal device.

According to the design, after determining, based on the antenna configuration reported by the first terminal device, that the network device can provide an access service for the first terminal device, the network device may further determine some operating parameters and the like, to better serve the first terminal device.

In a possible design, the antenna configuration of the first terminal device includes at least one of the following:
an antenna type of an uplink antenna of the first terminal device and/or an antenna type of a downlink antenna of the first terminal device; or a beam adjustment capability of the first terminal device.

In a possible design, the network device may further receive a radio resource control RRC connection setup request message from a first terminal device, where the RRC connection setup request message includes second information, the second information indicates a type of the first terminal device, and the type of the first terminal device is the fixed-terminal-device type or the mobile-terminal-device type; and before an RRC connection setup complete message is sent to the first terminal device, perform the following steps:
determining that a type switching frequency of the first terminal device is less than a specified frequency threshold;
when the type of the first terminal device is the fixed-terminal-device type, determining, based on location information of the first terminal device, duration in which the first terminal device is of the fixed-terminal-device type, and determining that the duration is greater than a specified duration threshold; or determining, based on location information of the first terminal device, that the first terminal device satisfies the determining condition of the fixed-terminal-device type; or
when the type of the first terminal device is the mobile-terminal-device type, and the second information further indicates a mobile terminal device subtype of the first terminal device, determining that the at least one mobile terminal device subtype whose access is allowed by the network device includes the mobile terminal device subtype of the first terminal device, where the mobile-terminal-device type includes the plurality of mobile terminal device subtypes.

According to the design, the network device may further determine, based on the type switching frequency of the first terminal device, the duration in which the first terminal device is of the fixed-terminal-device type, or the mobile terminal device subtype of which the first terminal device, whether to allow continued access of the first terminal device.

In a possible design, the second information further indicates a service to be implemented by the first terminal device. According to the design, the network device may determine, based on the service to be implemented by the first terminal device and the service whose implementation is allowed by the network device, whether to allow the continued access of the first terminal device.

Optionally, in but not limited to the following two implementations, the network device may determine, based on the service to be implemented by the first terminal device, a procedure to be subsequently performed:

Implementation 1: The service whose implementation is allowed by the network device may be used by the network device to further determine a terminal device that conforms to the terminal device type whose access is allowed by the network device and determine whether to allow continued access of the terminal device. Details are as follows.

When the terminal device type whose access is allowed by the network device includes the type of the first terminal device, and the service whose implementation is allowed by the network device includes the service that is to be implemented by the first terminal device and that is indicated by the second information, the network device allows the continued access of the first terminal device.

When the terminal device type whose access is allowed by the network device includes the type of the first terminal device, but the service whose implementation is allowed by the network device does not include the service that is to be implemented by the first terminal device and that is indicated by the second information, the network device does not allow the continued access of the first terminal device.

Implementation 2: The service whose implementation is allowed by the network device is special access permission set by the network device. A priority of the service whose implementation is allowed by the network device is higher than a priority of the terminal device type whose access is allowed by the network device. That is, regardless of whether a type of a terminal device is included in the terminal device type whose access is allowed by the network device, provided that a service to be implemented by the terminal device (a service that the terminal device requests to implement) is included in the service whose implementation is allowed by the network device, the network device allows the continued access of the terminal device. Specific steps are as follows.

When the service whose implementation is allowed by the network device includes the service that is to be implemented by the first terminal device and that is indicated by the second information, the network device may no longer determine whether the terminal device type whose access is allowed by the network device includes the type of the first terminal device, but directly allow the continued access of the first terminal device. When the service whose implementation is allowed by the network device does not include the service that is to be implemented by the first terminal device and that is indicated by the second information, the network device may continue to determine whether the terminal device type whose access is allowed by the network device includes the type of the first terminal device, thereby determining whether to allow the continued access of the first terminal device. When the terminal device type whose access is allowed by the network device includes the type of the first terminal device, the network device allows the continued access of the first terminal device. When the terminal device type whose access is allowed by the network device does not include the type of the first terminal device, the network device does not allow the continued access of the first terminal device.

Alternatively, when the terminal device type whose access is allowed by the network device includes the type of the first terminal device, the network device no longer determines whether the service whose implementation is allowed by the network device includes the service that is to be implemented by the first terminal device and that is indicated by the second information, but directly allows the continued access of the first terminal device. When the terminal device type whose access is allowed by the network device does not include the type of the first terminal device, the network device may continue to determine whether the service whose implementation is allowed by the network device includes the service that is to be implemented by the first terminal device and that is indicated by the second information, thereby determining whether to allow the continued access of the first terminal device. When the service whose implementation is allowed by the network device includes the service to be implemented by the first terminal device, the network device allows the continued access of the first terminal device. When the service whose implementation is allowed by the network device does not include the service to be implemented by the first terminal device, the network device does not allow the continued access of the first terminal device.

In a possible design, the network device may further broadcast fourth information, where the fourth information indicates an operating orbit type or operating location information of the network device.

According to the design, the network device may send the fourth information indicating the operating orbit type or the operating location information of the network device, so that the terminal device located within the coverage of the network device can learn of the operating orbit type or the operating location information of the network device, thereby choose, based on a type of the terminal device and a configuration of the terminal device, whether to access the network device. In this way, the terminal device in the NTN scenario can access an appropriate network device that conforms to the configuration of the terminal device, thereby improving the access success rate, and finally ensuring communication quality of the terminal device.

In a possible design, the network device may further send measurement configuration information to a second terminal device that has accessed the network device, where the measurement configuration information includes at least one to-be-measured frequency, and any to-be-measured frequency corresponds to one operating orbit type or one piece of operating location information.

According to the design, the network device may indicate, in a process of performing measurement configuration on a terminal device, an operating orbit type or operating location information corresponding to each to-be-measured frequency, so that the terminal device can choose, in a cell switching or cell reselection process, to access a neighboring cell on a specific frequency, thereby accessing a network device whose operating orbit type or operating location information conforms to an antenna configuration of the terminal device, and finally ensuring the communication quality of the terminal device.

In a possible design, the network device is a geostationary earth orbit GEO satellite, a highly elliptical orbit HEO satellite, a medium earth orbit MEO satellite, or a low earth orbit LEO satellite.

According to a second aspect, an embodiment of this application provides a communication method. The method may be applied to a terminal device. The terminal device herein may be the terminal device, or may be a processor, a module, a chip, a chip system, or the like that is in the terminal device and that implements the method. The method includes the following steps.

The terminal device receives first information from a network device, where the first information indicates a terminal device type whose access is allowed by the network device, and the terminal device type whose access is allowed by the network device includes a fixed-terminal-device type and/or a mobile-terminal-device type. Based on the first information, the terminal device initiates an access procedure to the network device, or starts a cell reselection procedure.

In a possible design, the terminal device may receive the first information broadcast by the network device.

In a possible design, based on the first information by using the following step, the terminal device may initiate the access procedure to the network device, or start the cell reselection procedure:
initiating the access procedure to the network device when the terminal device type whose access is allowed by the network device includes a type of the terminal device; or starting the cell reselection procedure when the terminal device type whose access is allowed by the network device does not include a type of the terminal device.

In a possible design, the mobile-terminal-device type includes a plurality of mobile terminal device subtypes. When the terminal device type whose access is allowed by the network device includes the mobile-terminal-device type, the first information further indicates at least one mobile terminal device subtype whose access is allowed by the network device. Based on this, the terminal device may initiate the access procedure to the network device by using the following step when the terminal device type whose access is allowed by the network device includes the type of the terminal device: when the type of the terminal device is the mobile-terminal-device type, initiating the access procedure to the network device when the terminal device type whose access is allowed by the network device includes the mobile-terminal-device type, and the at least one mobile terminal device subtype whose access is allowed by the network device includes a mobile terminal device subtype of the terminal device. In addition, when the type of the terminal device is the mobile-terminal-device type, the terminal device may further start the cell reselection procedure when the terminal device type whose access is allowed by the network device includes the mobile-terminal-device type, and the at least one mobile terminal device subtype whose access is allowed by the network device does not include a mobile terminal device subtype of the terminal device.

In a possible design, the mobile-terminal-device type is an earth station in motion ESIM, and the plurality of mobile terminal device subtypes are: an aeronautical ESIM, a maritime ESIM, and a land ESIM.

In a possible design, when the terminal device type whose access is allowed by the network device includes the fixed-terminal-device type, the first information further indicates that a determining condition of the fixed-terminal-device type is satisfied. Based on this, when the terminal device type whose access is allowed by the network device includes the type of the terminal device, based on the first information by using the following step, the terminal device may initiate the access procedure to the network device, or start the cell reselection procedure:
when the type of the terminal device is the fixed-terminal-device type, initiating the access procedure to the network device when the terminal device type whose access is allowed by the network device includes the fixed-terminal-device type, and the terminal device satisfies the determining condition; or when the type of the terminal device is the fixed-terminal-device type, starting the cell reselection procedure when the terminal device type whose access is allowed by the network device includes the fixed-terminal-device type, and the terminal device does not satisfy the determining condition.

In a possible design, the determining condition includes any one of the following:

A location of the terminal device is fixed;
the terminal device moves within a specified geographical range;
the terminal device moves at a specified quantity of geographical locations; or
the terminal device moves at a specified quantity of geographical locations, and a distance between any two geographical locations in the specified quantity of geographical locations is less than a specified distance threshold.

In a possible design, the fixed-terminal-device type is a fixed-satellite service FSS terminal device.

In a possible design, the first information further indicates a service whose implementation is allowed by the network device. Based on this, based on the first information by using the following step, the terminal device may initiate the access procedure to the network device, or start the cell reselection procedure:
initiating the access procedure to the network device when the service whose implementation is allowed by the network device includes a service to be implemented by the terminal device; or starting the cell reselection procedure when the service whose implementation is allowed by the network device does not include a service to be implemented by the terminal device.

The first terminal device is used as an example. Optionally, in but not limited to the following two specific implementations, the first terminal device may determine, based on a service to be implemented by the first terminal device, a procedure to be subsequently performed:

Implementation 1: The service whose implementation is allowed by the network device and that is indicated by the first information may be used by a terminal device that conforms to the terminal device type whose access is allowed by the network device to further determine to initiate an access procedure or start a cell reselection procedure. Details are as follows.

When the terminal device type whose access is allowed by the network device and that is indicated by the first information includes a type of the first terminal device, and the service whose implementation is allowed by the network device and that is indicated by the first information includes a service to be implemented by the first terminal device, the first terminal device initiates an access procedure to the network device.

When the terminal device type whose access is allowed by the network device and that is indicated by the first information includes a type of the first terminal device, but the service whose implementation is allowed by the network device and that is indicated by the first information does not include a service to be implemented by the first terminal device, the first terminal device starts a cell reselection procedure.

Implementation 2: The service whose implementation is allowed by the network device and that is indicated by the first information is special access permission set by the network device. A priority of the service whose implementation is allowed by the network device is higher than a priority of the terminal device type whose access is allowed by the network device. That is, regardless of whether a type of a terminal device is included in the terminal device type whose access is allowed by the network device, provided that a service to be implemented by the terminal device (a service that the terminal device requests to implement) is included in the service whose implementation is allowed by the network device, the network device allows access of the terminal device, and the terminal device may initiate an access procedure to the network device. Specific steps are as follows.

When the service whose implementation is allowed by the network device and that is indicated by the first information includes a service to be implemented by the first terminal device, the first terminal device no longer determines whether a type of the first terminal device is included in the terminal device type whose access is allowed by the network device, but directly initiates an access procedure to the network device. When the service whose implementation is allowed by the network device and that is indicated by the first information does not include a service to be implemented by the first terminal device, the first terminal device continues to determine, depending on whether a type of the first terminal device is included in the terminal device type whose access is allowed by the network device, to initiate an access procedure to the network device or start a cell reselection procedure.

Alternatively, when the terminal device type whose access is allowed by the network device and that is indicated by the first information includes a type of the first terminal device, the first terminal device no longer determines whether a service to be implemented by the first terminal device is included in the service whose implementation is allowed by the network device, but directly initiates an access procedure to the network device. When the terminal device type whose access is allowed by the network device and that is indicated by the first information does not include a type of the first terminal device, the first terminal device continues to determine, depending on whether a service to be implemented by the first terminal device is included in the service whose implementation is allowed by the network device, to initiate an access procedure to the network device or start a cell reselection procedure.

In this embodiment of this application, a communication system may agree that, in one of the implementations, the terminal device determines, based on the service to be implemented by the terminal device and the service whose implementation is allowed by the network device, to initiate the access procedure or start the cell reselection procedure. Optionally, the network device may alternatively send information to indicate an implementation to be used by the terminal device. For example, when the first information further indicates that the priority of the service whose implementation is allowed by the network device is higher than the priority of the terminal device type whose access is allowed by the network device, the terminal device uses the second implementation. When the first information further indicates that a priority of the service whose implementation is allowed by the network device is lower than a priority of the terminal device type whose access is allowed by the network device, the terminal device uses the first implementation.

In a possible design, after initiating the access procedure to the network device, the terminal device may further send an RRC connection setup request message to the network device, where the RRC connection setup request message includes at least one of the following: second information or third information, the second information indicates the type of the terminal device, the third information indicates an antenna configuration of the terminal device, and the type of the terminal device is the fixed-terminal-device type or the mobile-terminal-device type; and receive an RRC connection setup complete message from the network device, or receive an RRC connection reject message from the network device.

In a possible design, the antenna configuration of the terminal device includes at least one of the following:
an antenna type of an uplink antenna of the terminal device and/or an antenna type of a downlink antenna of the terminal device; or a beam adjustment capability of the terminal device.

In a possible design, the second information further indicates the service to be implemented by the terminal device.

In a possible design, based on the first information by using the following steps, the terminal device may initiate the access procedure to the network device:
receiving fourth information broadcast by the network device, where the fourth information indicates an operating orbit type or operating location information of the network device; and initiating the access procedure to the network device based on the first information and the fourth information.

In a possible design, after accessing the network device, the terminal device may further receive measurement configuration information from the network device, where the measurement configuration information includes at least one to-be-measured frequency, and any to-be-measured frequency corresponds to one operating orbit type or one piece of operating location information; select, from the at least one to-be-measured frequency based on the antenna configuration of the terminal device, a target frequency corresponding to a target operating orbit type or target operating location information; and perform cell measurement on a neighboring cell on the target frequency; or select a neighboring cell on the target frequency as a target cell to perform cell switching or cell reselection.

For technical effects that can be achieved by the second aspect, refer to the descriptions of the technical effects that can be achieved by the first aspect.

According to a third aspect, an embodiment of this application provides a communication method. The method may be applied to a network device. The network device herein may be the network device, or may be a processor, a module, a chip, a chip system, or the like that is in the network device and that implements the method. The method includes the following steps.

The network device receives an RRC connection setup request message from a first terminal device, where the RRC connection setup request message includes at least one of the following: first information or second information, the first information indicates a type of the first terminal device, the second information indicates an antenna configuration of the first terminal device, and the type of the first terminal device is a fixed-terminal-device type or a mobile-terminal-device type. Then, the network device sends an RRC connection setup complete message to the terminal device.

In the method, after randomly accessing the network device, a terminal device may report a type of the terminal device or an antenna configuration of the terminal device to the network device by using an RRC connection setup procedure, so that the network device can determine, based on these pieces of information, whether to allow continued access of the terminal device, to avoid a case in which an RRC connection failure of the terminal device is finally caused because of a continuation of the RRC connection setup procedure in a scenario in which the network device does not allow the access or cannot provide a service. According to the method, the terminal device may report capability information of the terminal device to the network device, thereby accessing an appropriate (that is, that allows the access of the network device or can provide the service for the network device) network device, to finally ensure that a terminal device in an NTN scenario can access a network device, thereby improving an access success rate, and reducing power consumption of the terminal device.

In a possible design, when the RRC connection setup request message includes the first information, a terminal device type whose access is allowed by the network device includes the type of the first terminal device.

In a possible design, when the RRC connection setup request message includes the first information, before the network device sends the RRC connection setup complete message to the terminal device, the following step may be further performed:
determining that a type switching frequency of the first terminal device is less than a specified frequency threshold;
when the type of the first terminal device is the fixed-terminal-device type, determining, based on location information of the terminal device, duration in which the first terminal device is of the fixed-terminal-device type, and determining that the duration is greater than a specified duration threshold; or determining, based on location information of the first terminal device, that the first terminal device satisfies a determining condition of the fixed-terminal-device type; or
when the type of the first terminal device is the mobile-terminal-device type, and the first information further indicates a mobile terminal device subtype of the first terminal device, determining that at least one mobile terminal device subtype whose access is allowed by the network device includes the mobile terminal device subtype of the first terminal device, where the mobile-terminal-device type includes a plurality of mobile terminal device subtypes.

According to the design, the network device may further determine, based on the type switching frequency of the first terminal device, the duration in which the first terminal device is of the fixed-terminal-device type, or the mobile terminal device subtype of which the first terminal device, whether to allow continued access of the first terminal device.

In a possible design, the mobile-terminal-device type is an earth station in motion ESIM, and the plurality of mobile terminal device subtypes are: an aeronautical ESIM, a maritime ESIM, and a land ESIM.

In a possible design, the determining condition includes:

A location of a terminal device is fixed;
a terminal device moves within a specified geographical range;
a terminal device moves at a specified quantity of geographical locations; or
a terminal device moves at a specified quantity of geographical locations, and a distance between any two geographical locations in the specified quantity of geographical locations is less than a specified distance threshold.

In a possible design, the fixed-terminal-device type is a fixed-satellite service FSS terminal device.

In a possible design, when the RRC connection setup request message includes the second information, the method further includes:
determining, based on the second information, beam scheduling information of the first terminal device and/or information about a service serviceable for the first terminal device.

In a possible design, the antenna configuration of the first terminal device includes at least one of the following:
an antenna type of an uplink antenna of the first terminal device and/or an antenna type of a downlink antenna of the first terminal device; or a beam adjustment capability of the first terminal device.

In a possible design, when the RRC connection setup request message includes the first information, the first information further indicates a service to be implemented by the first terminal device, and a service whose implementation is allowed by the network device includes the service to be implemented by the first terminal device.

According to the design, the network device may determine, based on the service to be implemented by the first terminal device and the service whose implementation is allowed by the network device, whether to allow the continued access of the first terminal device.

In a possible design, the network device may further broadcast third information, where the third information indicates an operating orbit type or operating location information of the network device.

In a possible design, the network device may further send measurement configuration information to the first terminal device, where the measurement configuration information includes at least one to-be-measured frequency, and any to-be-measured frequency corresponds to one operating orbit type or one piece of operating location information.

In a possible design, the network device is a geostationary earth orbit GEO satellite, a highly elliptical orbit HEO satellite, a medium earth orbit MEO satellite, or a low earth orbit LEO satellite.

For technical effects that can be achieved by some designs in the third aspect, refer to the descriptions of the technical effects that can be achieved by the first aspect.

According to a fourth aspect, an embodiment of this application provides a communication method. The method may be applied to a terminal device (a first terminal device is used as an example for description). The first terminal device herein may be the first terminal device, or may be a processor, a module, a chip, a chip system, or the like that is in the first terminal device and that implements the method. The method includes the following steps.

The first terminal device sends an RRC connection setup request message to a network device, where the RRC connection setup request message includes at least one of the following: first information or second information, the first information indicates a type of the first terminal device, the second information indicates an antenna configuration of the first terminal device, and the type of the first terminal device is a fixed-terminal-device type or a mobile-terminal-device type. The first terminal device receives an RRC connection setup complete message from the network device, or receives an RRC connection reject message from the network device.

In a possible design, the mobile-terminal-device type includes a plurality of mobile terminal device subtypes. Based on this, when the RRC connection setup request message includes the first information, and the type of the first terminal device is the mobile-terminal-device type, the first information further indicates a mobile terminal device subtype of the first terminal device.

In a possible design, the mobile-terminal-device type is an earth station in motion ESIM, and the plurality of mobile terminal device subtypes are: an aeronautical ESIM, a maritime ESIM, and a land ESIM.

In a possible design, the fixed-terminal-device type is a fixed-satellite service FSS terminal device.

In a possible design, the antenna configuration of the first terminal device includes at least one of the following:
an antenna type of an uplink antenna of the first terminal device and/or an antenna type of a downlink antenna of the first terminal device; or a beam adjustment capability of the first terminal device.

In a possible design, when the RRC connection setup request message includes the first information, the first information further indicates a service to be implemented by the first terminal device.

In a possible design, the first terminal device may further receive third information broadcast by the network device, where the third information indicates an operating orbit type or operating location information of the network device; and initiate an access procedure to the network device based on the third information.

In a possible design, after receiving the RRC connection setup complete message from the network device, the first terminal device may further receive measurement configuration information from the network device, where the measurement configuration information includes at least one to-be-measured frequency, and any to-be-measured frequency corresponds to one operating orbit type or one piece of operating location information; select, from the at least one to-be-measured frequency based on the antenna configuration of the first terminal device, a target frequency corresponding to a target operating orbit type or target operating location information; and perform cell measurement on a neighboring cell on the target frequency; or select a neighboring cell on the target frequency as a target cell to perform cell switching or cell reselection.

For technical effects that can be achieved by the fourth aspect, refer to the descriptions of the technical effects that can be achieved by the third aspect.

According to a fifth aspect, an embodiment of this application provides a communication method. The method may be applied to a network device. The network device herein may be the network device, or may be a processor, a module, a chip, a chip system, or the like that is in the network device and that implements the method. The method includes the following step.

The network device sends first information, where the first information indicates an operating orbit type or operating location information of the network device.

According to the method, the network device may send the first information indicating the operating orbit type or the operating location information of the network device, so that a terminal device located within coverage of the network device can learn of the operating orbit type or the operating location information of the network device, thereby freely choose, based on a configuration of the terminal device, whether to access the network device. In this way, a terminal device in an NTN scenario can access an appropriate network device that conforms to a configuration of the terminal device, thereby improving an access success rate, finally ensuring communication quality of the terminal device, and reducing power consumption of the terminal device.

In a possible design, the network device may send the first information through broadcast.

According to a sixth aspect, an embodiment of this application provides a communication method. The method may be applied to a terminal device (a first terminal device is used as an example for description). The first terminal device herein may be the first terminal device, or may be a processor, a module, a chip, a chip system, or the like that is in the first terminal device and that implements the method. The method includes the following steps.

The first terminal device receives first information from a network device, where the first information indicates an operating orbit type or operating location information of the network device; and initiates an access procedure to the network based on the first information.

In a possible design, the first terminal device receives the first information broadcast by the network device.

For technical effects that can be achieved by the sixth aspect, refer to the descriptions of the technical effects that can be achieved by the fifth aspect.

According to a seventh aspect, an embodiment of this application provides a communication method. The method may be applied to a network device. The network device herein may be the network device, or may be a processor, a module, a chip, a chip system, or the like that is in the network device and that implements the method. The method includes the following step.

The network device sends measurement configuration information to a first terminal device, where the measurement configuration information includes at least one to-be-measured frequency, and any to-be-measured frequency corresponds to one operating orbit type or one piece of operating location information.

According to the method, the network device may indicate, in a process of performing measurement configuration on a terminal device, an operating orbit type or operating location information corresponding to each to-be-measured frequency, so that the terminal device can choose, in a cell switching or cell reselection process, to access a neighboring cell on a specific frequency, thereby accessing a network device whose operating orbit type or operating location information conforms to an antenna configuration of the terminal device, and finally ensuring communication quality of the terminal device.

According to an eighth aspect, an embodiment of this application provides a communication method. The method may be applied to a terminal device (a first terminal device is used as an example for description). The first terminal device herein may be the first terminal device, or may be a processor, a module, a chip, a chip system, or the like that is in the first terminal device and that implements the method. The method includes the following steps.

The first terminal device receives measurement configuration information from a network device, where the measurement configuration information includes at least one to-be-measured frequency, and any to-be-measured frequency corresponds to one operating orbit type or one piece of operating location information; selects, from the at least one to-be-measured frequency based on an antenna configuration of the first terminal device, a target frequency corresponding to a target operating orbit type or target operating location information; and performs cell measurement on a neighboring cell on the target frequency; or selects a neighboring cell on the target frequency as a target cell to perform cell switching or cell reselection.

For technical effects that can be achieved by the eighth aspect, refer to the descriptions of the technical effects that can be achieved by the seventh aspect.

According to a ninth aspect, an embodiment of this application provides a communication apparatus, including units configured to perform steps in any one of the first aspect to the eighth aspect. Optionally, the communication apparatus may include a communication unit and a processing unit. The communication unit is configured to receive and send data, and the processing unit is configured to perform the method provided in any one of the foregoing aspects.

According to a tenth aspect, an embodiment of this application provides a communication device, including a transceiver and a processor. The transceiver is configured to receive and send a signal. The processor is configured to execute program instructions, so that the communication device performs the method provided in any one of the foregoing aspects. Optionally, the communication device further includes a memory. The memory is configured to store the program instructions. The processor may read the program instructions in the memory, so that the communication device performs the method provided in any one of the foregoing aspects.

According to an eleventh aspect, an embodiment of this application provides a communication device, including at least one processing element and at least one storage element. The at least one storage element is configured to store a program and data, and the at least one processing element is configured to perform the method provided in any one of the foregoing aspects of this application.

According to a twelfth aspect, an embodiment of this application provides a communication system, including: a network device configured to perform the first aspect and a terminal device configured to perform the second aspect; a network device configured to perform the third aspect and a terminal device configured to perform the fourth aspect; a network device configured to perform the fifth aspect and a terminal device configured to perform the sixth aspect; or a network device configured to perform the seventh aspect and a terminal device configured to perform the eighth aspect.

According to a thirteenth aspect, an embodiment of this application further provides a computer program product. When the computer program product runs on a computer, the computer is caused to perform the method according to any one of the foregoing aspects. Optionally, the computer may be a communication device like a terminal device or a network device.

According to a fourteenth aspect, an embodiment of this application further provides a computer-readable storage medium. The computer-readable storage medium stores a computer program. When the computer program is executed by a computer, the computer is caused to perform the method provided in any one of the foregoing aspects. Optionally, the computer may be a communication device like a terminal device or a network device.

According to a fifteenth aspect, an embodiment of this application further provides a chip. The chip is configured to read a computer program stored in a memory, to perform the method provided in any one of the foregoing aspects. Optionally, the chip may include a processor. The processor is coupled to the memory, and is configured to read the computer program stored in the memory, to implement the methods provided in the foregoing embodiments. Optionally, the chip may further include components such as a memory, a communication interface, and a power supply module. The memory is configured to store a computer program, the communication interface is configured to receive and send data, and the power supply module is configured to supply power to the processor.

According to a sixteenth aspect, an embodiment of this application further provides a chip system. The chip system includes a processor, configured to support a computer apparatus in implementing the method provided in any one of the foregoing aspects. In a possible design, the chip system further includes a memory. The memory is configured to store a program and data that are necessary for the computer apparatus. The chip system may include a chip, or may include the chip and another discrete device.

### BRIEF DESCRIPTION OF DRAWINGS

FIG. 1a to FIG. 1d are diagrams of typical application scenarios of a satellite-terrestrial integrated network according to an embodiment of this application;
FIG. 2 is a flowchart of a communication method according to an embodiment of this application;
FIG. 3 is a flowchart of a communication method according to an embodiment of this application;
FIG. 4 is a flowchart of another communication method according to an embodiment of this application;
FIG. 5 is a flowchart of still another communication method according to an embodiment of this application;
FIG. 6 is a diagram of a structure of a communication apparatus according to an embodiment of this application; and
FIG. 7 is a diagram of a structure of a communication device according to an embodiment of this application.

### DESCRIPTION OF EMBODIMENTS

This application provides a communication method and apparatus, to ensure that a terminal device in an NTN scenario can access a network device. The method and the apparatus are based on a same technical concept. Because problem-resolving principles of the method and the apparatus are similar, mutual reference may be made to implementation of the apparatus and the method. Repeated parts are not described again.

Some terms in this application are explained and described below, to facilitate understanding of a person skilled in the art.
(1) An NTN is proposed relative to a conventional terrestrial network, is a network established by using a non-terrestrial communication technology, and may include but is not limited to a network that performs a communication service by using a spectrum resource on a communication platform, for example, a satellite platform, an uncrewed aerial vehicle (uncrewed aerial vehicle, UAV) platform, or a high altitude platform station (high altitude platform station, HAPS).

For example, the NTN may include but is not limited to a satellite system, a UAV communication system, and a HAPS system. Based on different altitudes of satellites relative to the earth surface (namely, satellite orbit altitudes), satellite systems may be classified into a geostationary earth orbit (geostationary earth orbit, GEO or GSO) satellite system, a highly elliptical orbit (highly elliptical orbit, HEO) satellite system, a medium earth orbit (medium earth orbit, MEO) satellite system, a low earth orbit (low earth orbit, LEO) satellite system, and the like.

The GEO satellite system may also be referred to as a geostationary orbit. The HEO satellite system, the MEO satellite system, and the LEO satellite system may also be collectively referred to as non-geostationary earth orbit (none-geostationary earth orbit, NGEO or NGSO) satellite systems or non-geostationary orbit satellite systems.

Correspondingly, based on different types of the satellite systems, the satellites in the satellite systems may also be classified into a GEO satellite, an HEO satellite, an MEO satellite, an LEO satellite, and the like.

Compared with a terrestrial communication network, the NTN has features such as wider coverage, a higher path loss, a longer delay, a higher speed, and lower costs. With growing interest in NTN research, the 3rd generation partnership project (3rd generation partnership project, 3GPP) has also conducted standardization research on the NTN, and is committed to supplementing or enhancing communication performance of a mobile communication system through construction of the NTN. For example, the 3GPP has started research on satellite-terrestrial integration and related solutions since Release 14 (release 14, R14).

(2) A terminal device is a device that provides a voice and/or data connectivity for a user and that can access a network device through a wireless interface. The terminal device may also be referred to as user equipment (user equipment, UE), a mobile station (mobile station, MS), a mobile terminal (mobile terminal, MT), or the like. In this application, the terminal device may be at a fixed location, or may be mobile. This is not limited in this application.

For example, the terminal device may be a handheld device with a wireless connection function, various vehicle-mounted devices, a road side unit, an internet of things terminal, an access terminal, a terminal in V2X communication, a subscriber unit, a subscriber station, a mobile station, a remote station, a remote terminal, a mobile device, a user terminal, a terminal, a wireless communication device, a user agent, or a user apparatus. Currently, some examples of the terminal device are: a mobile phone (mobile phone), a tablet computer, a notebook computer, a palmtop computer, a mobile internet device (mobile internet device, MID), a smart point of sale (point of sale, POS) terminal, a wearable device, a virtual reality (virtual reality, VR) device, an augmented reality (augmented reality, AR) device, a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, a wearable device, a terminal device in a future 5G network or a terminal device in a future evolved public land mobile network (public land mobile network, PLMN), a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), various smart meters (a smart water meter, a smart electric meter, and a smart gas meter), an on-board electronic control unit (electronic control unit, ECU), an on-board computer, an on-board cruise system, a telematics box (telematics box, T-BOX), a UE unit, a UE station, a mobile station, a remote station, a remote terminal device, a mobile device, a wireless communication device, a UE agent, a UE apparatus, and the like.

The terminal device may directly communicate with the network device, or may communicate with the network device via a relay station. The terminal device may communicate with a plurality of network devices equipped with different communication technologies. For example, the terminal device may communicate with a base station that is equipped with and supports an LTE network, may communicate with a base station that is equipped with and supports a 5G network, or may support and be equipped with dual connectivity to the base station in the LTE network and the base station in the 5G network.

(3) The network device is an entity that is on a network side of a communication system and that has a wireless transceiver function. In embodiments of this application, the network device may include but is not limited to a base station carried on a satellite (briefly referred to as a satellite base station), a transmission reception point (transmission receiving point/transmission reception point, TRP) or a distributed unit (distributed unit, DU) carried on the satellite, a satellite ground station in the satellite system (which may be briefly referred to as a ground station), a balloon station, an uncrewed-aerial-vehicle station, or the like.

A standard of the network device is not limited in embodiments of this application. For example, the network device may be a NodeB (NodeB), an evolved NodeB (evolved NodeB, eNB), a next generation NodeB (next generation NodeB, gNB), or a network device of another standard evolved based on the foregoing network device.

A type of the network device is not limited in embodiments of this application either. For example, the network device may be an access point (access point, AP), a wireless-fidelity (wireless-fidelity, Wi-Fi) AP, a home base station (for example, a home evolved NodeB, or a home NodeB, HNB), a wireless relay node, a wireless backhaul node, a macro base station, a micro base station, a picocell base station, a small cell, or a relay station.

A specific technology and a specific device form used by the network device are not limited in embodiments of this application. The network device may correspond to an eNB in a 4G system, and correspond to a gNB in a 5G system.

In addition, in a network structure, the network device may include a central unit (central unit, CU) node and a distributed unit (distributed unit, DU) node. In this structure, protocol layers of the network device may be split. Functions of some protocol layers are centrally controlled by the CU, functions of some or all of remaining protocol layers are distributed in the DU, and the CU centrally controls the DU.

For example, functions of a packet data convergence protocol (packet data convergence protocol, PDCP) layer and a protocol layer above the packet data convergence protocol layer may be set on the CU, and functions of protocol layers below the PDCP layer (for example, a radio link control (radio link control, RLC) layer and a medium access control (medium access control, MAC) layer) are set on the DU. It should be noted that division based on such a protocol layer is merely an example, and division may alternatively be performed based on another protocol layer. A radio frequency apparatus may be remotely disposed and not placed in the DU, may be integrated into the DU, or may be partially remotely disposed and partially integrated into the DU. This is not limited in embodiments of this application. In addition, in some embodiments, a control plane (control plane, CP) and a user plane (user plane, UP) of the CU may be further separated into different entities for implementation, where the entities are a control-plane CU entity (CU-CP entity) and a user-plane CU entity (CU-UP entity).

In this network architecture, signaling generated by the CU may be sent to the terminal device via the DU, or signaling generated by the terminal device may be sent to the CU via the DU. The DU may transparently transmit the signaling to the terminal device or the CU by directly encapsulating the signaling at a protocol layer without parsing the signaling. In this network architecture, the CU is classified as a network device on a radio access network (radio access network, RAN) side. In addition, the CU may alternatively be classified as a network device on a core network (core network, CN) side. This is not limited in this application.

(4) Terminal device type. In this application, terminal device types are classified based on mobility of the terminal device. Generally, the terminal device types may include a fixed-terminal-device type and a mobile-terminal-device type.

As the name implies, the fixed-terminal-device type is proposed for a terminal device with a fixed location and limited mobility. For example, the terminal device of the fixed-terminal-device type may satisfy any one of the following conditions:

A location of the terminal device is fixed; the terminal device moves within a specified geographical range;
the terminal device moves at a specified quantity of geographical locations; or
the terminal device moves at a specified quantity of geographical locations, and a distance between any two geographical locations in the specified quantity of geographical locations is less than a specified distance threshold.

The mobile-terminal-device type is proposed for a terminal device with a non-fixed location and high mobility. Optionally, based on information such as a service that can be implemented by the terminal device, or an environment or a geographical location feature of the terminal device, the mobile-terminal-device type may be further subdivided into a plurality of mobile terminal device subtypes.

It should be noted that, in the communication system, the terminal device may determine a type of the terminal device based on location information and a moving speed of the terminal device, or may determine a type of the terminal device based on a configuration of the user or a configuration of a network side. The network device can also identify the type of the terminal device based on the location information and the moving speed of the terminal device, or the like. Therefore, from a perspective of the network device, the fixed-terminal-device type is a type that is of the terminal device with the fixed location and limited mobility and that can be identified by the network device, and the mobile-terminal-device type is a type that is of the terminal device with the changing device location and the high mobility and that can be identified by the network device.

For example, in an NTN scenario, the fixed-terminal-device type may be a fixed-satellite service (fixed-satellite service, FSS) terminal device, and the mobile-terminal-device type may be an earth station in motion (earth station in motion, ESIM). The plurality of mobile terminal device subtypes included in the mobile-terminal-device type may include but are not limited to: an aeronautical ESIM (aeronautical ESIM, A-ESIM), a maritime ESIM (maritime ESIM, M-ESIM), and a land ESIM (land ESIM, L-ESIM).

(5) Antenna configuration of the terminal device. In high-frequency-band communication, there may be a plurality of types of antennas of the terminal device, for example, a phased array antenna and a reflector antenna. In addition, one or more antenna types may be configured inside one terminal device, and one or more antennas may be configured inside the terminal device for a same antenna type. When a plurality of antenna types are configured inside the terminal device, the terminal device may be configured with different antennas respectively responsible for receiving and sending, or may be configured with a same antenna responsible for receiving and sending, which means whether receiving and sending performed by the terminal device share an antenna (or whether an uplink antenna and a downlink antenna of the terminal device share a same antenna).

It should be further noted that attributes such as operating characteristics, operating parameters, and radio frequency capabilities of different antenna types or different antennas of a same type may be different, which further affects a beam adjustment capability of the terminal device. The beam adjustment capability of the terminal device is a beamforming direction adjustment capability of the terminal device, for example, a capability of the terminal device to adjust a gain and a direction of a beam.

In conclusion, the antenna configuration of the terminal device may be understood as: an antenna type of the uplink antenna of the terminal device and/or an antenna type of the downlink antenna of the terminal device; or the beam adjustment capability of the terminal device.

It should be understood that, in embodiments of this application, "at least one" means one or more, and "a plurality of' means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of plural items. For example, at least one of a, b, or c may represent: a, b, c, a and b, a and c, b and c, or a, b, and c, where a, b, and c may be singular or plural.

In embodiments of this application, descriptions such as "when ..." and "if" all mean that the device performs corresponding processing in an objective case, and are not for limiting time, and the device is not required to perform a determining action during implementation. This does not mean that there is another limitation either.

It should be noted that, in this application, "indicating" may include directly indicating and indirectly indicating. When a piece of information is described to indicate A, the information may directly indicate A, or indirectly indicate A, but it does not mean that the information necessarily carries A. In an example in which first information indicates first content, the first information may include the first content, may include a part of the first content or an identifier, an index, or the like of the first content, or may include an algorithm, a calculation parameter, or the like for determining the first content. An "indicating" manner is not limited in this application.

In this application, "containing/including/carrying A" may be equivalent to "containing/including/carrying information about A". The information about A indicates A.

In addition, it should be understood that, in the descriptions of embodiments of this application, terms such as "first" and "second" are merely intended for differentiated description, and cannot be construed as an indication or an implication of relative importance, or an indication or an implication of a sequence.

The following describes embodiments of this application in detail with reference to the accompanying drawings.

The communication method provided in embodiments of this application is applicable to various NTN scenarios. Because the satellite system is used as a typical application scenario in the NTN scenarios, in this application, the satellite system in the NTN is used as an example to describe a communication system to which embodiments of this application are applicable.

In the satellite system, a terminal device located on the ground accesses a network through an air interface. A base station may be deployed on the satellite, or may be deployed on the ground (in this case, the satellite has a relay function). Optionally, some functions of the base station may be deployed on the satellite, and the other functions may be deployed on the ground. The satellite may communicate with the ground station through a radio link, and further communicate with a base station or a core network in the terrestrial network.

The following describes functions of network elements in the satellite system.

The terminal device may access the satellite system through the air interface, and initiates services such as a call and internet access. For specific descriptions and examples, refer to the foregoing term explanation in the point (2).

The base station provides a wireless access service for the terminal device, schedules a radio resource for the terminal device that accesses the base station, and provides a reliable wireless transmission protocol, a data encryption protocol, and the like. For specific descriptions and examples, refer to the foregoing term explanation of the network device in the point (3).

The core network is for implementing services such as user access control, mobility management, session management, user security authentication, and charging. The core network includes a plurality of functional units, which may be classified into a control plane functional unit and a data plane functional unit.

For example, the control plane functional unit may include a session management function (session management function, SMF) network element, an access and mobility management function (access and mobility management function, AMF) network element, a unified data management (unified data management, UDM) entity, and a policy control function (policy control function, PCF) entity. The AMF network element is responsible for user access management, security authentication, and mobility management. The SMF network element is responsible for session management.

The data plane functional unit may include a user plane function (user plane function, UPF) network element. The UPF network element is mainly responsible for managing functions such as user plane data transmission, traffic statistics, and security eavesdropping.

The ground station is configured to enable the satellite to access the terrestrial network, and is responsible for forwarding signaling and service data between the satellite and the base station or the core network in the terrestrial network. The ground station may also be referred to as a gateway (gateway), the satellite ground station, an earth station, or the like.

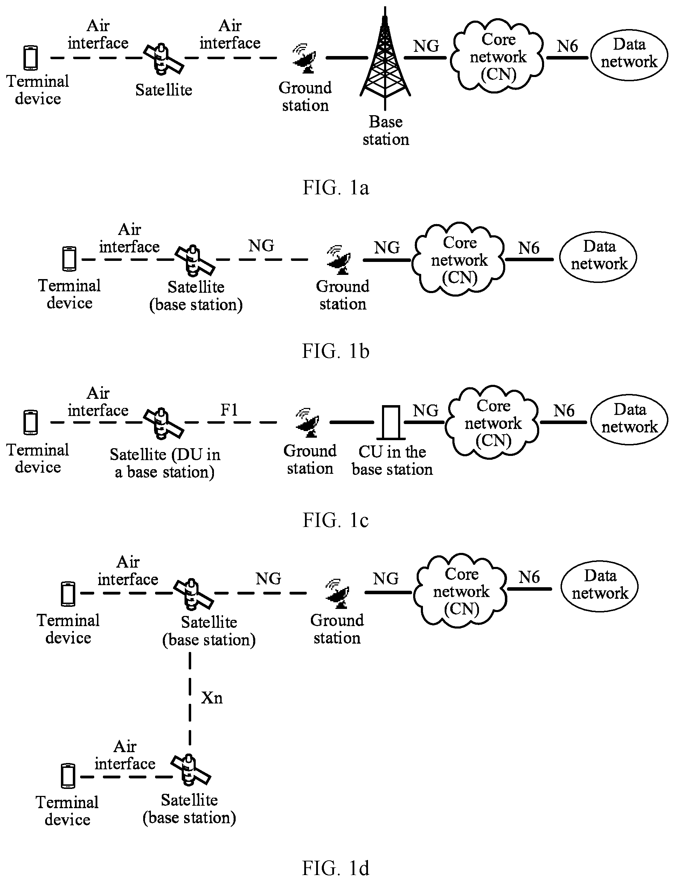

Based on a communication mode of the satellite, the satellite system may have a bent-pipe (Bent-pipe) mode and a regenerative (Regenerative) mode. The following provides descriptions with reference to examples of several typical application scenarios of a satellite-terrestrial integrated network shown in FIG. 1a to FIG. 1d.

In the bent-pipe mode, the satellite has a function of signal frequency conversion and forwarding. As shown in FIG. 1a, a terminal device is connected to a satellite and the satellite is connected to a ground station through air interfaces (for example, Uu interfaces). The satellite is equivalent to a repeater, and is configured to forward a signal between the satellite and the ground station. There is a communication connection between the ground station and a base station in a terrestrial network. The base station may communicate with a core network (core network, CN) through a next generation (next generation, NG) network interface (for example, an N2 interface or an N3 interface), and the core network communicates with a data network (data network, DN) through an N6 interface.

In a satellite system in the regenerative mode, as shown in FIG. 1b to FIG. 1d, a base station or a DU in the base station may be carried on a satellite. The satellite can parse and process a signal received from a ground station, and send processed signal to a terminal device, to implement signal regeneration.

As shown in FIG. 1b, the base station is carried on the satellite. In this case, the satellite may be referred to as a satellite base station. The terminal device may set up a communication connection to the satellite through an air interface, and the satellite may set up a communication connection to a core network through NG interfaces via the ground station. Optionally, in another scenario, the satellite may alternatively set up a communication connection to a base station in a terrestrial network through Xn interfaces via the ground station, and the base station in the terrestrial network sets up a communication connection to a core network through an NG interface. The core network and a DN communicate with each other through an N6 interface.

As shown in FIG. 1c, the DU in the base station is carried on the satellite, and the ground station may be connected to a CU in a base station deployed in a terrestrial network. The terminal device may set up a communication connection to the satellite through an air interface, and the satellite may set up a communication connection to the CU through an F1 interface via the ground station. For interfaces between the CU, a core network, and a DN, refer to FIG. 1b. Details are not described herein again.

In comparison with the scenario shown in FIG. 1b, communication between satellites (base stations) is added in the application scenario shown in FIG. 1d. That is, the terminal device may access a network via one or more satellites (base stations). As shown in the figure, the satellites (the base stations) may communicate with each other through an Xn interface.

In the application scenarios shown in FIG. 1a to FIG. 1d, the base station (or the CU and the DU in the base station) (for example, the satellite carrying the base station, the base station located in the terrestrial network, or the satellite carrying the DU and a DU located in the terrestrial network) may provide a service for a terminal device within coverage of the base station by using a beamforming technology.

The following describes the interfaces between the network elements in the application scenarios shown in FIG. 1a to FIG. 1d.

The air interface represents a radio link between the terminal device and the base station. For example, the air interface may be the Uu interface.

The Xn interface represents an interface between base stations, and is mainly for signaling exchange such as switching.

The NG interface represents an interface between the base station and the core network, and is mainly for exchanging signaling such as non-access stratum (non-access stratum, NAS) signaling of the core network and service data of a user. For example, the NG interface may include the N2 interface, the N3 interface, and the like.

It should be noted that one satellite or one ground station is shown in some application scenarios shown in FIG. 1a to FIG. 1d. In an actual scenario, an architecture of a plurality of satellites and/or a plurality of ground stations may be used based on a requirement. Each satellite may provide a communication service for one or more terminal devices, each ground station may correspond to one or more satellites, and each satellite may correspond to one or more ground stations. This is not specifically limited in embodiments of this application.

It should be noted that the satellite systems shown in FIG. 1a to FIG. 1d do not constitute a limitation on the communication system to which embodiments of this application are applicable. Therefore, the communication method provided in embodiments of this application is further applicable to communication systems in the various NTN scenarios. In addition, embodiments of this application impose no limitation on a mobile communication system standard of the terrestrial network in the satellite system. For example, the terrestrial network may be a long term evolution (long term evolution, LTE) communication system, a 5th generation (5th Generation, 5G) communication system (also referred to as a 5G new radio (new radio, NR) system), and a future communication system.

Different countries or regions have different laws and regulations to limit high-frequency-band communication in the NTN scenario. The laws and regulations may specify types, used frequency bands, implemented services, and the like of the network device and the terminal device. However, the network device in the NTN scenario may serve terminal devices in the different countries or regions. Laws and regulations of even a same country continuously vary with time and communication development. Further, types, forms, services, and capabilities of the terminal device in the NTN scenario are also richer and more diversified. Therefore, in the NTN scenario, a network device that the terminal device requests to access may not support access of the terminal device due to a stipulation of local and current laws and regulations. Consequently, the access of the terminal device is limited, and service implementation of the terminal device is finally affected.

Based on this, to ensure that the terminal device in the NTN scenario can access the network device, this application provides the following several embodiments. The following embodiments or instances are applicable to any NTN scenario, for example, the satellite systems shown in FIG. 1a to FIG. 1d. Based on this, a network device in embodiments or the instances is the network device used in the NTN, namely, a device that provides an access service for the terminal device on the network side, for example, a conventional base station located in the terrestrial network, or the satellite carrying the base station or the DU. When the network device is a satellite, a type of the satellite is not limited in embodiments of this application. The satellite may be the GEO satellite, the HEO satellite, the MEO satellite, the LEO satellite, or the like. In addition, for ease of description and understanding, an example in which a first terminal device is used as any terminal device in the NTN scenario is used for description in embodiments. The following separately provides descriptions with reference to corresponding flowcharts.

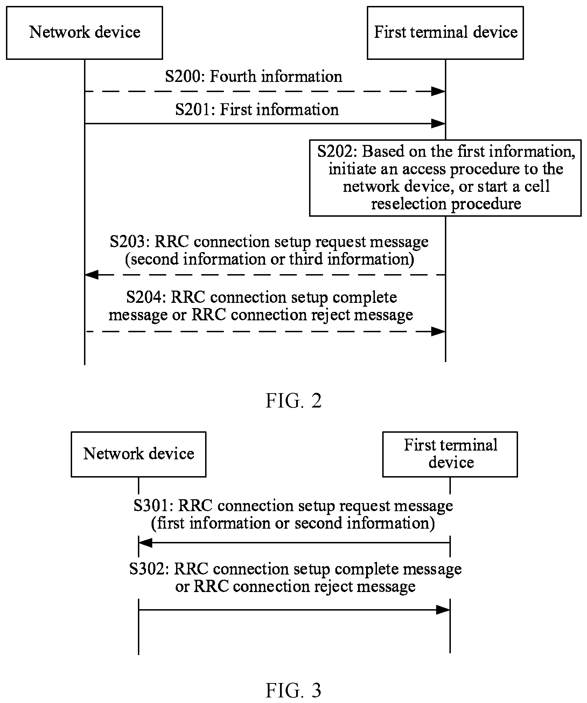

Embodiment 1: This embodiment of this application provides a communication method. The following describes the method with reference to a flowchart shown in FIG. 2.

S201: A network device sends first information, and a first terminal device located within coverage of the network device receives the first information from the network device, where the first information indicates a terminal device type whose access is allowed by the network device, and the terminal device type whose access is allowed by the network device includes a fixed-terminal-device type and/or a mobile-terminal-device type.

It should be noted that the terminal device type whose access is allowed by the network device usually complies with a stipulation of local and current laws and regulations of the network device. Optionally, the network device may analyze the local and current laws and regulations, to determine the terminal device type whose access is allowed by the network device. Alternatively, a core network device configures, for the network device by sending a message, the terminal device type whose access is allowed by the network device. Alternatively, a user analyzes the local and current laws and regulations, to determine the terminal device type whose access is allowed by the network device, and configures, for the network device, the terminal device type whose access is allowed by the network device. A manner in which the network device determines the terminal device type whose access is allowed by the network device is not limited in this embodiment of this application.

In an implementation, in S201, the network device may broadcast the first information, so that all terminal devices within the coverage of the network device can receive the first information. Based on this, the first terminal device may receive the first information broadcast by the network device. For example, the network device may use a system message (for example, a master information block (master information block, MIB) or a system information block (system information block, SIB)) to carry the first information. In this way, the network device may notify the terminal device within the coverage of the first information, and a terminal device that has not accessed the network device may determine, based on the first information and a type of the terminal device, whether to access the network device, to avoid a case in which an access procedure initiated by the terminal device fails because the network device does not allow access of the type of the terminal device.

In this embodiment of this application, it can be learned from the foregoing descriptions of the mobile-terminal-device type in the term explanation in the point (4) that, in some scenarios, the mobile-terminal-device type may be further subdivided into the plurality of mobile terminal device subtypes. That is, the mobile-terminal-device type may include the plurality of mobile terminal device subtypes. For example, the mobile-terminal-device type is an ESIM, and the plurality of mobile terminal device subtypes included in the mobile-terminal-device type may be: an aeronautical ESIM, a maritime ESIM, and a land ESIM.

Based on this, in an implementation, when the terminal device type whose access is allowed by the network device and that is indicated by the first information includes the mobile-terminal-device type, the first information may further indicate at least one mobile terminal device subtype whose access is allowed by the network device.

In this way, when the local laws and regulations of the network device specifically specify a mobile terminal device subtype supported by the network device, the network device may notify, by using the first information, the terminal device within the coverage of at least one sub mobile terminal device whose access is allowed by the network device, so that a terminal device that is of the mobile-terminal-device type and whose mobile terminal device subtype is included in the at least one sub mobile terminal device whose access is allowed by the network device can initiate an access procedure to the network device. For a specific process of determining the at least one sub mobile terminal device whose access is allowed by the network device, refer to the foregoing process in which the network device determines the terminal device type whose access is allowed by the network device. Details are not described herein again.

In addition, it can be learned from the foregoing descriptions of the fixed-terminal-device type in the term explanation in the point (4) that different countries or regions may have different determining conditions of the fixed-terminal-device type. Therefore, in an implementation, when the terminal device type whose access is allowed by the network device and that is indicated by the first information includes the fixed-terminal-device type, the first information may further indicate that a determining condition of the fixed-terminal-device type is satisfied. For example, the fixed-terminal-device type may be an FSS terminal device.

In this way, the network device may notify, by using the first information, the terminal device within the coverage of the determining condition of the fixed-terminal-device type whose access is allowed by the network device, so that a terminal device that is of the fixed-terminal-device type and that satisfies the determining condition can initiate an access procedure to the network device.

Similar to the terminal device type whose access is allowed by the network device and that is indicated by the first information, the determining condition indicated by the first information also complies with the stipulation of the local and current laws and regulations of the network device. For a specific determining process, refer to the foregoing process in which the network device determines the terminal device type whose access is allowed by the network device. Details are not described herein again.

Optionally, the determining condition indicated by the first information may include but is not limited to any one of the following:

A location of a terminal device is fixed;
a terminal device moves within a specified geographical range;
a terminal device moves at a specified quantity of geographical locations; or
a terminal device moves at a specified quantity of geographical locations, and a distance between any two geographical locations in the specified quantity of geographical locations is less than a specified distance threshold.

On a terminal device side, the terminal device may further more accurately determine, based on the determining condition that is of the fixed-terminal-device type and that is indicated by the first information, a type of the terminal device in a current environment, to confirm or correct the type of the terminal device. For example, in another environment, the terminal device determines, based on location information of the terminal device or a user configuration, that the terminal device type of the terminal device is the fixed-terminal-device type. However, in the current environment, after receiving the first information, the terminal device determines that the terminal device does not satisfy the determining condition indicated by the first information, so that the terminal device can correct the type of the terminal device to the mobile-terminal-device type. Certainly, in some scenarios, the terminal device may alternatively not perform a step of determining or correcting a type of the terminal device, but directly determine whether location information of the terminal device satisfies the determining condition, to determine to initiate an access procedure or start cell reselection.

In an implementation, in addition to indicating the terminal device type whose access is allowed by the network device, the first information may further indicate a service whose implementation is allowed by the network device. The service whose implementation is allowed by the network device is a service in which the network device can provide a communication service for a terminal device that accesses the network device, or a service that can be implemented by the terminal device that accesses the network device.

Optionally, the service whose implementation is allowed by the network device may alternatively be specified by the local and current laws and regulations of the network device, or may be determined based on a communication characteristic of the network device, a communication system in which the network device is located, or the like.

In some cases, the service whose implementation is allowed by the network device may alternatively be special access permission set by the network device, in other words, special access permission set by the network device for a terminal device that does not conform to the terminal device type whose access is allowed by the network device. In this case, a priority of the service whose implementation is allowed by the network device is higher than a priority of the terminal device type whose access is allowed by the network device. That is, regardless of whether the type of the terminal device is included in the terminal device type whose access is allowed by the network device, provided that a service to be implemented by the terminal device (a service that the terminal device requests to implement) is included in the service whose implementation is allowed by the network device, the network device allows access of the terminal device, and the terminal device may initiate the access procedure to the network device. Optionally, in this case, the network device may further indicate, in the first information, the priority of the service whose implementation is allowed by the network device and the priority of the terminal device type whose access is allowed by the network device, or a relationship between the priority of the service whose implementation is allowed by the network device and the priority of the terminal device type whose access is allowed by the network device. In this way, the terminal device that receives the first information may determine an implementation in which whether to initiate the access procedure is determined based on the service whose implementation is allowed by the network device.

Based on this, if the type of the terminal device is included in the terminal device type whose access is allowed by the network device, the network device allows the access of the terminal device. If the type of the terminal device is not included in the terminal device type whose access is allowed by the network device, but the service to be implemented by the terminal device is included in the service whose implementation is allowed by the network device, the network device also allows the access of the terminal device. If a service type of the terminal device is not included in the terminal device type whose access is allowed by the network device, and the service to be implemented by the terminal device is not included in the service whose implementation is allowed by the network device, the network device does not allow the access of the terminal device. For a specific implementation in which the terminal device determines, based on the service whose implementation is allowed by the network device, whether to initiate the access procedure, refer to the following related descriptions in S202.

For example, when the service whose implementation is allowed by the network device is the special access permission set by the network device, services whose implementation is allowed by the network device may be some special services related to life and property security, for example, an emergency call (emergency call, e-call) service.

S202: Based on the first information, the first terminal device initiates an access procedure to the network device, or starts a cell reselection procedure.

In S202, the first terminal device may determine, based on s type of the first terminal device and the first information, to initiate the access procedure or start the cell reselection procedure. Specific steps are as follows.

The first terminal device initiates the access procedure to the network device when the terminal device type whose access is allowed by the network device and that is indicated by the first information includes the type of the first terminal device.

The first terminal device starts the cell reselection procedure when the terminal device type whose access is allowed by the network device and that is indicated by the first information does not include the type of the first terminal device.

In an implementation, in a scenario in which the terminal device type whose access is allowed by the network device and that is indicated by the first information includes the mobile-terminal-device type, and the first information further indicates the at least one mobile terminal device subtype whose access is allowed by the network device, if the type of the first terminal device is the mobile-terminal-device type, the first terminal device further needs to further determine, based on a mobile terminal device subtype of the first terminal device, to initiate the access procedure or start the cell reselection procedure. Specific steps are as follows.

When the type of the first terminal device is the mobile-terminal-device type, the first terminal device initiates the access procedure to the network device when the terminal device type whose access is allowed by the network device and that is indicated by the first information includes the mobile-terminal-device type, and the at least one mobile terminal device subtype whose access is allowed by the network device and that is indicated by the first information includes the mobile terminal device subtype of the first terminal device.

When the type of the first terminal device is the mobile-terminal-device type, the first terminal device starts the cell reselection procedure when the terminal device type whose access is allowed by the network device and that is indicated by the first information includes the mobile-terminal-device type, and the at least one mobile terminal device subtype whose access is allowed by the network device and that is indicated by the first information does not include the mobile terminal device subtype of the first terminal device.

In an implementation, in a scenario in which the terminal device type whose access is allowed by the network device and that is indicated by the first information includes the fixed-terminal-device type, and the first information further indicates that the determining condition of the fixed-terminal-device type is satisfied, if the type of the first terminal device is the fixed-terminal-device type, the first terminal device further needs to further determine, based on the determining condition, to initiate the access procedure or start the cell reselection procedure. Specific steps are as follows.

When the type of the first terminal device is the fixed-terminal-device type, the first terminal device initiates the access procedure to the network device when the terminal device type whose access is allowed by the network device and that is indicated by the first information includes the fixed-terminal-device type, and the first terminal device satisfies the determining condition indicated by the first information.

When the type of the first terminal device is the fixed-terminal-device type, the first terminal device starts the cell reselection procedure when the terminal device type whose access is allowed by the network device and that is indicated by the first information includes the fixed-terminal-device type, and the first terminal device does not satisfy the determining condition indicated by the first information.

For the determining condition of the fixed-terminal-device type, refer to the related descriptions in S201. In the foregoing step, the first terminal device may determine, based on location information of the first terminal device, whether the first terminal device satisfies the determining condition.

In an implementation, when the first information further indicates the service whose implementation is allowed by the network device, the first terminal device may determine, based on a service to be implemented by the first terminal device and the service whose implementation is allowed by the network device, to initiate the access procedure or start the cell reselection procedure. Specific steps are as follows.

The first terminal device initiates the access procedure to the network device when the service whose implementation is allowed by the network device and that is indicated by the first information includes the service to be implemented by the first terminal device.

The first terminal device starts the cell reselection procedure when the service whose implementation is allowed by the network device and that is indicated by the first information does not include the service to be implemented by the first terminal device.

Optionally, in but not limited to the following two specific implementations, the first terminal device may determine, based on the service to be implemented by the first terminal device, a procedure to be subsequently performed:

Implementation 1: The service whose implementation is allowed by the network device and that is indicated by the first information may be used by a terminal device that conforms to the terminal device type whose access is allowed by the network device to further determine to initiate an access procedure or start a cell reselection procedure. Details are as follows.

When the terminal device type whose access is allowed by the network device and that is indicated by the first information includes the type of the first terminal device, and the service whose implementation is allowed by the network device and that is indicated by the first information includes the service to be implemented by the first terminal device, the first terminal device initiates the access procedure to the network device.

When the terminal device type whose access is allowed by the network device and that is indicated by the first information includes the type of the first terminal device, but the service whose implementation is allowed by the network device and that is indicated by the first information does not include the service to be implemented by the first terminal device, the first terminal device starts the cell reselection procedure.

Implementation 2: The service whose implementation is allowed by the network device and that is indicated by the first information is the special access permission set by the network device. The priority of the service whose implementation is allowed by the network device is higher than the priority of the terminal device type whose access is allowed by the network device. That is, regardless of whether the type of the terminal device is included in the terminal device type whose access is allowed by the network device, provided that the service to be implemented by the terminal device (the service that the terminal device requests to implement) is included in the service whose implementation is allowed by the network device, the network device allows the access of the terminal device, and the terminal device may initiate the access procedure to the network device. Specific steps are as follows.

When the service whose implementation is allowed by the network device and that is indicated by the first information includes the service to be implemented by the first terminal device, the first terminal device no longer determines whether the type of the first terminal device is included in the terminal device type whose access is allowed by the network device, but directly initiates the access procedure to the network device. When the service whose implementation is allowed by the network device and that is indicated by the first information does not include the service to be implemented by the first terminal device, the first terminal device continues to determine, depending on whether the type of the first terminal device is included in the terminal device type whose access is allowed by the network device, to initiate the access procedure to the network device or start the cell reselection procedure.

Alternatively, when the terminal device type whose access is allowed by the network device and that is indicated by the first information includes the type of the first terminal device, the first terminal device no longer determines whether the service to be implemented by the first terminal device is included in the service whose implementation is allowed by the network device, but directly initiates the access procedure to the network device. When the terminal device type whose access is allowed by the network device and that is indicated by the first information does not include the type of the first terminal device, the first terminal device continues to determine, depending on whether the service to be implemented by the first terminal device is included in the service whose implementation is allowed by the network device, to initiate the access procedure to the network device or start the cell reselection procedure.

In this embodiment of this application, a communication system may agree that, in one of the implementations, the terminal device determines, based on the service to be implemented by the terminal device and the service whose implementation is allowed by the network device, to initiate the access procedure or start the cell reselection procedure. Optionally, the network device may alternatively send information to indicate an implementation to be used by the terminal device. For example, when the first information further indicates that the priority of the service whose implementation is allowed by the network device is higher than the priority of the terminal device type whose access is allowed by the network device, the terminal device uses the second implementation. When the first information further indicates that the priority of the service whose implementation is allowed by the network device is lower than the priority of the terminal device type whose access is allowed by the network device, the terminal device uses the first implementation.

Through step S202, after receiving the first information, the first terminal device may determine, based on the first information and a status of the first terminal device, whether the terminal device is a terminal device whose access is allowed by the network device, thereby determining whether to access the network device, to avoid a case in which the access procedure initiated by the first terminal device finally fails because the first terminal device initiates the access procedure to the network device in a scenario in which the network device does not allow access. In this way, the first terminal device may select, based on the first information sent by the network device, an appropriate network device for access, to finally ensure that a terminal device in an NTN scenario can access a network device, thereby improving an access success rate, and reducing power consumption of the terminal device.

After the first terminal device initiates the access procedure to the network device in S202, the first terminal device may first establish uplink synchronization with the network device by using a random access procedure, and then initiate an RRC connection setup procedure to set up an RRC connection. Finally, the first terminal device may initiate a registration procedure, to register with the communication system in which the network device is located.

Optionally, in this embodiment of this application, after initiating the access procedure, the first terminal device may further report the type of the first terminal device or an antenna configuration of the first terminal device to the network device, so that the network device can verify the first terminal device based on the type of the first terminal device reported by the first terminal device, and determine whether the first terminal device is the terminal device whose access is allowed by the network device; or the network device can determine, based on the antenna configuration reported by the first terminal device, whether an access service can be provided for the first terminal device, determine some operating parameters, and so on, to better serve the first terminal device. Refer to FIG. 2. The process may be implemented through the following S203 and S204.

S203: The first terminal device sends an RRC connection setup request message (for example, an RRCSetRequest message) to the network device, and the network device receives the RRC connection setup request message from the first terminal device, where the RRC connection setup request message includes at least one of the following: second information or third information, the second information indicates the type of the first terminal device, the third information indicates the antenna configuration of the first terminal device, and the type of the first terminal device is the fixed-terminal-device type or the mobile-terminal-device type.

S204: The network device sends an RRC connection setup complete message (for example, an RRCSetComplete message) to the first terminal device, and the first terminal device receives the RRC connection setup complete message from the network device; or the network device sends an RRC connection reject message (for example, an RRCReject message) to the first terminal device, and the first terminal device receives the RRC connection reject message from the network device.

In S204, the network device may determine, based on content included in the received RRC connection setup request message, whether to allow continued access of the first terminal device, thereby sending the RRC connection setup complete message or the RRC connection reject message to the first terminal device.

In an implementation, the first terminal device sends the second information to the network device via the RRC connection setup request message, that is, reports the type of the first terminal device. In this implementation, the network device may determine, by determining whether the terminal device type whose access is allowed by the network device includes the type of the first terminal device, whether to allow the continued access of the first terminal device.

Optionally, with reference to at least one of the following implementations, the network device may further determine, when the terminal device type whose access is allowed by the network device includes the type of the first terminal device, whether to allow the continued access of the first terminal device.

Implementation 1: In some scenarios, the communication system does not allow type switching on the terminal device. In this case, the network device may determine, based on historical access information of the first terminal device (including a type of the first terminal device each time the first terminal device accesses the network device), whether type switching occurs on the first terminal device. When determining that type switching does not occur on the first terminal device, the network device allows the continued access of the first terminal device, that is, continues to perform the RRC setup procedure of the first terminal device, and sends the RRC connection setup complete message to the first terminal device after completion. When determining that type switching occurs on the first terminal device, the network device does not allow the continued access of the first terminal device, and the network device may send the RRC connection reject message to the first terminal device.

Implementation 2: In some scenarios, the communication system allows type switching on the terminal device, but a type switching frequency of the terminal device is limited to some extent. In this case, the network device may determine a type switching frequency of the first terminal device based on historical access information of the first terminal device (including a type of the first terminal device each time the first terminal device accesses the network device and time of each time of access of the first terminal device). When determining that the type switching frequency of the first terminal device is less than a specified frequency threshold, the network device allows the continued access of the first terminal device. When determining that the type switching frequency of the first terminal device is greater than or equal to a specified frequency threshold, the network device does not allow the continued access of the first terminal device.

Implementation 3: In some scenarios, the communication system allows type switching on the terminal device, but duration in which a terminal device of the fixed-terminal-device type is of the fixed-terminal-device type is limited to some extent. When the second information indicates that the type of the first terminal device is the fixed-terminal-device type, the network device may determine, based on the location information of the first terminal device (for example, location information of the first terminal device included in historical access information of the first terminal device), duration in which the first terminal device is of the fixed-terminal-device type. When determining that the duration is greater than or equal to a specified duration threshold, the network device allows the continued access of the first terminal device. When determining that the duration is less than a specified frequency threshold, the network device does not allow the continued access of the first terminal device.

Implementation 4: When the second information indicates that the type of the first terminal device is the fixed-terminal-device type, the network device may further determine, based on the location information of the first terminal device, whether the first terminal device satisfies the determining condition of the fixed-terminal-device type. When determining that the first terminal device satisfies the determining condition, the network device allows the continued access of the first terminal device. When determining that the first terminal device does not satisfy the determining condition, the network device does not allow the continued access of the first terminal device.

Implementation 5: When the second information indicates that the type of the first terminal device is the mobile-terminal-device type, and the second information further indicates the mobile terminal device subtype of the first terminal device, the network device may further determine whether the at least one mobile terminal device subtype whose access is allowed by the network device includes the mobile terminal device subtype of the first terminal device. When determining that the at least one mobile terminal device subtype whose access is allowed by the network device includes the mobile terminal device subtype of the first terminal device, the network device allows the continued access of the first terminal device. When determining that the at least one mobile terminal device subtype whose access is allowed by the network device does not include the mobile terminal device subtype of the first terminal device, the network device does not allow the continued access of the first terminal device.

In some scenarios, the first terminal device may further report, via the second information, the service to be implemented by the first terminal device. In this way, the network device may also determine, based on the service to be implemented by the first terminal device, the procedure to be subsequently performed. For a specific process, refer to S202 in which the first terminal device determines, based on the service to be implemented by the first terminal device, to initiate the access procedure or start the cell reselection procedure. Specific steps are as follows.

When the service whose implementation is allowed by the network device includes the service that is to be implemented by the first terminal device and that is indicated by the second information, the network device allows the continued access of the first terminal device, that is, continues to perform the RRC setup procedure of the first terminal device, and sends the RRC connection setup complete message to the first terminal device after completion.

When the service whose implementation is allowed by the network device does not include the service that is to be implemented by the first terminal device and that is indicated by the second information, the network device does not allow the continued access of the first terminal device, and the network device may send the RRC connection reject message to the first terminal device.

Optionally, in but not limited to the following two implementations, the network device may alternatively determine, based on the service to be implemented by the first terminal device, the procedure to be subsequently performed:

Implementation 1: The service whose implementation is allowed by the network device may be used by the network device to further determine the terminal device that conforms to the terminal device type whose access is allowed by the network device and determine whether to allow continued access of the terminal device. Details are as follows.

When the terminal device type whose access is allowed by the network device includes the type of the first terminal device, and the service whose implementation is allowed by the network device includes the service that is to be implemented by the first terminal device and that is indicated by the second information, the network device allows the continued access of the first terminal device.

When the terminal device type whose access is allowed by the network device includes the type of the first terminal device, but the service whose implementation is allowed by the network device does not include the service that is to be implemented by the first terminal device and that is indicated by the second information, the network device does not allow the continued access of the first terminal device.

Implementation 2: The service whose implementation is allowed by the network device is the special access permission set by the network device. The priority of the service whose implementation is allowed by the network device is higher than the priority of the terminal device type whose access is allowed by the network device. That is, regardless of whether the type of the terminal device is included in the terminal device type whose access is allowed by the network device, provided that the service to be implemented by the terminal device (the service that the terminal device requests to implement) is included in the service whose implementation is allowed by the network device, the network device allows the continued access of the terminal device. Specific steps are as follows.

When the service whose implementation is allowed by the network device includes the service that is to be implemented by the first terminal device and that is indicated by the second information, the network device may no longer determine whether the terminal device type whose access is allowed by the network device includes the type of the first terminal device, but directly allow the continued access of the first terminal device. When the service whose implementation is allowed by the network device does not include the service that is to be implemented by the first terminal device and that is indicated by the second information, the network device may continue to determine whether the terminal device type whose access is allowed by the network device includes the type of the first terminal device, thereby determining whether to allow the continued access of the first terminal device. When the terminal device type whose access is allowed by the network device includes the type of the first terminal device, the network device allows the continued access of the first terminal device. When the terminal device type whose access is allowed by the network device does not include the type of the first terminal device, the network device does not allow the continued access of the first terminal device.

Alternatively, when the terminal device type whose access is allowed by the network device includes the type of the first terminal device, the network device no longer determines whether the service whose implementation is allowed by the network device includes the service that is to be implemented by the first terminal device and that is indicated by the second information, but directly allows the continued access of the first terminal device. When the terminal device type whose access is allowed by the network device does not include the type of the first terminal device, the network device may continue to determine whether the service whose implementation is allowed by the network device includes the service that is to be implemented by the first terminal device and that is indicated by the second information, thereby determining whether to allow the continued access of the first terminal device. When the service whose implementation is allowed by the network device includes the service to be implemented by the first terminal device, the network device allows the continued access of the first terminal device. When the service whose implementation is allowed by the network device does not include the service to be implemented by the first terminal device, the network device does not allow the continued access of the first terminal device.

It should be noted that the network device may store inside the priority of the service whose implementation is allowed by the network device and the priority of the terminal device type whose access is allowed by the network device, or the relationship between the priority of the service whose implementation is allowed by the network device and the priority of the terminal device type whose access is allowed by the network device. In this way, the network device may determine, based on an internal configuration, which one of the foregoing implementations is to be used to determine, based on the service to be implemented by the first terminal device, whether to allow the continued access of the first terminal device.

It should be further noted that, to simplify an access procedure of the terminal device in the communication system, generally, when the first information indicates the service whose implementation is allowed by the network device, the second information reported by the first terminal device may not indicate the service to be implemented by the first terminal device. When the first information does not indicate the service whose implementation is allowed by the network device, the second information reported by the first terminal device may indicate the service to be implemented by the first terminal device.

In an implementation, the first terminal device sends the third information to the network device via the RRC connection setup request message, that is, reports the antenna configuration of the first terminal device. In this implementation, the network device may further determine, based on the antenna configuration of the first terminal device, whether to allow the continued access of the first terminal device.

Optionally, the antenna configuration of the first terminal device may include at least one of the following: an antenna type of an uplink antenna of the first terminal device and/or an antenna type of a downlink antenna of the first terminal device; or a beam adjustment capability of the first terminal device.

For example, when the network device (for example, an LEO satellite) does not support access of a terminal device with a reflector antenna, when an antenna type that is of the first terminal device and that is indicated by the third information is the reflector antenna, the network device may not allow the continued access of the first terminal device. When the antenna type that is of the first terminal device and that is indicated by the third information is a phased array antenna, the network device may allow the continued access of the first terminal device.

In addition, in this implementation, when the network device allows, based on the antenna configuration of the first terminal device, the continued access of the first terminal device, the network device may further determine, based on the antenna configuration of the first terminal device, information such as the some operating parameters, to better serve the first terminal device.

Based on this, the network device may determine, based on the antenna configuration that is of the first terminal device and that is indicated by the third information, beam information of the first terminal device and/or information about a service (for example, a type of the service and QoS of the service) serviceable for the first terminal device. The beam information that is of the first terminal device and that is determined by the network device may be a beam scheduling manner that is set by the network device for transmission of data of the first terminal device.

For example, when the beam adjustment capability of the first terminal device is weaker, the network device may perform transmission of the data of the first terminal device by using a first beam. When the beam adjustment capability of the first terminal device is stronger, the network device may perform transmission of the data of the first terminal device by using a second beam. Coverage/A lobe width/A beam width of the first beam is greater than coverage/a lobe width/a beam width of the second beam. That is, the first beam may be denoted as a wide beam, and the second beam may be denoted as a narrow beam.

For another example, when the beam adjustment capability of the first terminal device is weaker, or the antenna type of the first terminal device is the reflector antenna, the network device may determine that the service serviceable for the first terminal device is a broadcast service.

It should be further noted that, when the network device determines the some operating parameters such as the information about the service serviceable for the first terminal device, the network device may further notify the first terminal device of the operating parameters. For example, the network device may send the working parameters to the first terminal device via an RRC message (for example, the RRC connection setup complete message). For another example, the network device may send the operating parameters to the core network device, and then the core network sends the operating parameters to the first terminal device via a non-access stratum (non-access stratum, NAS) message.

In addition, to support the terminal device in freely selecting an accessed network device based on a configuration (for example, an antenna configuration) of the terminal device and the like, this embodiment of this application further provides the following two implementations.

In an implementation, refer to FIG. 2. The network device may further broadcast fourth information within coverage of the network device through S200, where the fourth information indicates an operating orbit type (for example, a GEO, an HEO, an MEO, or an LEO) or operating location information (for example, an operating orbit height) of the network device. Based on this, in S202, the first terminal device may determine, based on the received first information and the fourth information, to initiate the access procedure to the network device or start the cell reselection procedure.

For example, when the beam adjustment capability of the first terminal device is weaker, the first terminal device may preferentially select satellites with a higher operating orbit height, because the satellites have a lower requirement on a beamforming capability of a terminal device that accesses the satellites. That is, when the operating orbit type that is of the network device and that is indicated by the fourth information is the GEO or the HEO, the first terminal device may initiate the access procedure to the network device based on the first information. When the operating orbit type that is of the network device and that is indicated by the fourth information is the LEO, the first terminal device starts the cell reselection procedure, and selects another network device whose operating orbit type is the GEO or the HEO for access.

For another example, when the beam adjustment capability of the first terminal device is stronger, the first terminal device may preferentially select satellites with a lower operating orbit height, because the satellites have a higher requirement on a beamforming capability of a terminal device that accesses the satellites. That is, when an operating orbit that is of the network device and that is indicated by the fourth information is the LEO, the first terminal device may initiate the access procedure to the network device based on the first information. When the operating orbit type that is of the network device and that is indicated by ground information is the GEO or the HEO, the first terminal device starts the cell reselection procedure, and selects another network device whose operating orbit type is the LEO for access.

In another implementation, the network device may send measurement configuration information to a terminal device (denoted as a second terminal device herein for differentiation) that has accessed the network device. The measurement configuration information includes at least one to-be-measured frequency, and any to-be-measured frequency corresponds to one operating orbit type or one piece of operating location information.

In this way, the second terminal device may select, from the at least one to-be-measured frequency based on an antenna configuration of the second terminal device, a target frequency corresponding to a target operating orbit type or target operating location information. For example, when the beam adjustment capability of the first terminal device is weaker, the first terminal device may select a target frequency corresponding to the operating orbit type GEO or HEO. For another example, when the beam adjustment capability of the first terminal device is stronger, the first terminal device may select a target frequency corresponding to the operating orbit type LEO.

In an implementation, after determining the target frequency, when performing cell measurement, the second terminal device may perform cell measurement only on a neighboring cell on the target frequency, to reduce cell measurement objects, and reduce power consumption. In another implementation, after determining the target frequency, the second terminal device may select a neighboring cell on the target frequency as a target cell to perform cell switching or cell reselection.

In this implementation, the network device may indicate, in a process of performing measurement configuration on the terminal device, an operating orbit type or operating location information corresponding to each to-be-measured frequency, so that the terminal device can choose, in a cell switching or cell reselection process, to access a neighboring cell on a specific frequency, thereby accessing a network device whose operating orbit type or operating location information conforms to the antenna configuration of the terminal device, and finally ensuring communication quality of the terminal device.

In conclusion, this embodiment of this application provides the communication method. In the method, the network device may send the first information indicating the terminal device type whose access is allowed by the network device. In this way, after receiving the first information, the terminal device located within the coverage of the network device may determine, based on the first information and a status of the terminal device, whether the terminal device is a terminal device whose access is allowed by the network device, thereby determining whether to access the network device, to avoid the case in which the access procedure initiated by the terminal device finally fails because the terminal device initiates the access procedure to the network device in the scenario in which the network device does not allow the access. According to the method, the terminal device may select, based on the first information sent by the network device, an appropriate network device for access, to finally ensure that the terminal device in the NTN scenario can access the network device, thereby improving the access success rate, and reducing the power consumption of the terminal device.

Embodiment 2: This embodiment of this application provides a communication method. The following describes the method with reference to a flowchart shown in FIG. 3.

S301: After establishing uplink synchronization with a network device by initiating a random access procedure, a first terminal device sends an RRC connection setup request message to the network device, and the network device receives the RRC connection setup request message (for example, an RRCSetRequest message) from the first terminal device, where the RRC connection setup request message includes at least one of the following: first information or second information, the first information indicates a type of the first terminal device, the second information indicates an antenna configuration of the first terminal device, and the type of the first terminal device is a fixed-terminal-device type or a mobile-terminal-device type.

S302: The network device sends an RRC connection setup complete message (for example, an RRCSetComplete message) to the first terminal device, and the first terminal device receives the RRC connection setup complete message from the network device; or the network device sends an RRC connection reject message to the first terminal device, and the first terminal device receives the RRC connection reject message (for example, an RRCReject message) from the network device.

In S204, the network device may determine, based on content included in the received RRC connection setup request message, whether to allow continued access of the first terminal device, thereby sending the RRC connection setup complete message or the RRC connection reject message to the first terminal device.

Optionally, the network device may verify the first terminal device based on the type that is of the first terminal device and that is reported by the first terminal device, and determine whether the first terminal device is a terminal device whose access is allowed by the network device. Optionally, the network device may determine, based on the antenna configuration reported by the first terminal device, whether an access service can be provided for the first terminal device, and may further determine some operating parameters and the like when the access service can be provided for the first terminal device, to better serve the first terminal device. For the foregoing specific process, refer to the descriptions of S203 and S204 in Embodiment 1. Details are not described herein again.

In addition, to support a terminal device in freely selecting an accessed network device based on a configuration (for example, an antenna configuration) of the terminal device and the like, this embodiment of this application further provides the following two implementations.

In a first implementation, the network device broadcasts third information within coverage, where the third information indicates an operating orbit type (for example, a GEO, an HEO, an MEO, or an LEO) or operating location information (for example, an operating orbit height) of the network device. Based on this, before performing S301, the first terminal device may determine, based on the received first information, to initiate the access procedure to the network device. For a specific process and descriptions, refer to the related descriptions of S200 in Embodiment 1. Details are not described herein again.

In a second implementation, after the first terminal device accesses the network device (for example, after the network device sends the RRC connection setup complete message to the first terminal device), the network device may send measurement configuration information to a terminal device that has accessed the network device. The measurement configuration information includes at least one to-be-measured frequency, and any to-be-measured frequency corresponds to one operating orbit type or one piece of operating location information. In this way, the first terminal device may select, from the at least one to-be-measured frequency based on the antenna configuration of the first terminal device, a target frequency corresponding to a target operating orbit type or target operating location information. In an implementation, when performing cell measurement, the first terminal device may perform cell measurement only on a neighboring cell on the target frequency, to reduce cell measurement objects, and reduce power consumption. In another implementation, the first terminal device may select a neighboring cell on the target frequency as a target cell to perform cell switching or cell reselection.

In this implementation, the network device may indicate, in a process of performing measurement configuration on the terminal device, an operating orbit type or operating location information corresponding to each to-be-measured frequency, so that the terminal device can choose, in a cell switching or cell reselection process, to access a neighboring cell on a specific frequency, thereby accessing a network device whose operating orbit type or operating location information conforms to the antenna configuration of the terminal device, and finally ensuring communication quality of the terminal device.

In conclusion, this embodiment of this application provides the communication method. In the method, after randomly accessing the network device, the terminal device may report a type of the terminal device or the antenna configuration of the terminal device to the network device by using an RRC connection setup procedure, so that the network device can determine, based on these pieces of information, whether to allow continued access of the terminal device, to avoid a case in which an RRC connection failure of the terminal device is finally caused because of a continuation of the RRC connection setup procedure in a scenario in which the network device does not allow the access or cannot provide a service. According to the method, the terminal device may report capability information of the terminal device to the network device, thereby accessing an appropriate (that is, that allows the access of the network device or can provide the service for the network device) network device, to finally ensure that a terminal device in an NTN scenario can access a network device, thereby improving an access success rate, and reducing power consumption of the terminal device.

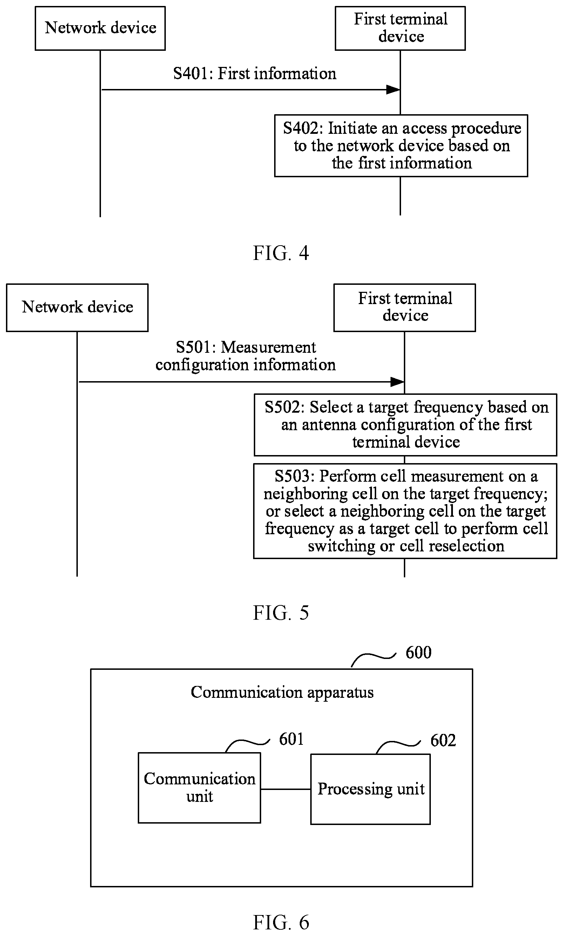

Embodiment 3: This embodiment of this application provides a communication method. The following describes the method with reference to a flowchart shown in FIG. 4.

S401: A network device sends first information, and a first terminal device located within coverage of the network device receives the first information from the network device, where the first information indicates an operating orbit type (for example, a GEO, an HEO, an MEO, or an LEO) or operating location information (for example, an operating orbit height) of the network device.

Optionally, the network device may send the first information through broadcast. For example, the network device may use a MIB or a SIB to carry the first information.

S402: The first terminal device initiates an access procedure to the network device based on the first information.

For example, when a beam adjustment capability of the first terminal device is weaker, the first terminal device may preferentially select satellites with a higher operating orbit height, because the satellites have a lower requirement on a beamforming capability of a terminal device that accesses the satellites. That is, when the operating orbit type that is of the network device and that is indicated by the first information is the GEO or the HEO, the first terminal device may initiate the access procedure to the network device based on the first information.

For another example, when a beam adjustment capability of the first terminal device is stronger, the first terminal device may preferentially select satellites with a lower operating orbit height, because the satellites have a higher requirement on a beamforming capability of a terminal device that accesses the satellites. That is, when an operating orbit that is of the network device and that is indicated by the first information is the LEO, the first terminal device may initiate the access procedure to the network device based on the first information.

According to the method provided in this embodiment of this application, the network device may send the first information indicating the operating orbit type or the operating location information of the network device, so that a terminal device located within the coverage of the network device can learn of the operating orbit type or the operating location information of the network device, thereby freely choose, based on a configuration of the terminal device, whether to access the network device. In this way, a terminal device in an NTN scenario can access an appropriate network device that conforms to a configuration of the terminal device, thereby improving an access success rate, finally ensuring communication quality of the terminal device, and reducing power consumption of the terminal device.

Embodiment 4: This embodiment of this application provides a communication method. The following describes the method with reference to a flowchart shown in FIG. 5.

S501: After a first terminal device accesses a network device, the network device sends measurement configuration information to the first terminal device, and the first terminal device receives the measurement configuration information from the network device, where the measurement configuration information includes at least one to-be-measured frequency, and any to-be-measured frequency corresponds to one operating orbit type or one piece of operating location information.

S502: The first terminal device selects, from the at least one to-be-measured frequency based on an antenna configuration of the first terminal device, a target frequency corresponding to a target operating orbit type or target operating location information.

For example, when a beam adjustment capability of the first terminal device is weaker, the first terminal device may select a target frequency corresponding to an operating orbit type GEO or HEO.

For another example, when a beam adjustment capability of the first terminal device is stronger, the first terminal device may select a target frequency corresponding to an operating orbit type LEO.

S503: The first terminal device performs cell measurement on a neighboring cell on the target frequency; or selects a neighboring cell on the target frequency as a target cell to perform cell switching or cell reselection.

According to the method provided in this embodiment of this application, the network device may indicate, in a process of performing measurement configuration on a terminal device, an operating orbit type or operating location information corresponding to each to-be-measured frequency, so that the terminal device can choose, in a cell switching or cell reselection process, to access a neighboring cell on a specific frequency, thereby accessing a network device whose operating orbit type or operating location information conforms to an antenna configuration of the terminal device, and finally ensuring communication quality of the terminal device.

It should be noted that, for ease of description, the foregoing embodiments are written from perspectives of different design concepts. Therefore, the methods provided in the foregoing embodiments may be implemented separately, or methods provided in a plurality of embodiments may be implemented in combination with each other. For example, in some scenarios, a communication device in a communication system performs the method provided in S201 and S202 in Embodiment 1. In some scenarios, a communication device in a communication system may perform the method provided in Embodiment 2. In some scenarios, a communication device in a communication system may perform the method provided in S201 to S204 in Embodiment 1. In some scenarios, a communication device in a communication system may perform the methods provided in Embodiment 3 and Embodiment 4.

It should be further noted that each step in the foregoing embodiments or instances may be performed by a corresponding device, or may be performed by a component like a module, a chip, a processor, or a chip system in the device. This is not limited in embodiments of this application. The foregoing embodiments are described only by using an example in which each step is executed by the corresponding device. In addition, specific implementations or examples in the foregoing embodiments constitute no limitation on the solutions provided in embodiments of this application.

It should be noted that, in the foregoing embodiments, a part of steps may be selected for implementation, or a sequence of steps in the figure may be adjusted for implementation. This is not limited in this application. It should be understood that performing the part of the steps in the figure, adjusting the sequence of the steps, or combination with each other for specific implementation shall fall within the protection scope of this application.

It may be understood that, to implement functions in the foregoing embodiments, the devices in the foregoing embodiments include corresponding hardware structures and/or software modules for performing the functions. A person skilled in the art should be easily aware that, with reference to the units and method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

It may be understood that, the network architecture and the application scenario described in embodiments of this application are intended to describe the technical solutions in embodiments of the present invention more clearly, but do not constitute a limitation on the technical solutions provided in embodiments of the present invention. A person of ordinary skill in the art may be aware that, with evolution of the network architecture and emergence of a new service, the technical solutions provided in embodiments of the present invention are also applicable to a similar technical problem.

It should be noted that the "step" in embodiments of this application is merely an example, is a representation method used to better understand embodiments, and does not constitute a substantive limitation on execution of the solutions in this application. For example, the "step" may be further understood as a "feature". In addition, the step does not constitute any limitation on an execution sequence of the solutions in this application, and a new technical solution formed through an operation, for example, step sequence change, step combination, or step splitting, performed on this basis without affecting implementation of the overall solutions also falls within the scope disclosed in this application.

Based on a same technical concept, this application further provides a communication apparatus. The communication apparatus is applicable to an NTN scenario, for example, the satellite systems shown in FIG. 1a to FIG. 1d. The communication apparatus is configured to implement the methods provided in the foregoing embodiments. The communication apparatus may be used in the terminal device or the network device in the foregoing embodiments. Refer to FIG. 6. The communication apparatus 600 includes a communication unit 601 and a processing unit 602.

The communication unit 601 is configured to: receive and send data, and support the communication apparatus 600 in communicating with another device.

The processing unit 602 is configured to: control and manage an action of the communication apparatus 600, and perform steps performed by the network device or the terminal device in the communication methods provided in the foregoing embodiments.

Optionally, the communication apparatus 600 further includes a storage unit, configured to store program code and/or data of the communication apparatus 600.

The communication unit 601 may be referred to as an input/output unit, a transceiver unit, or the like. The communication unit 601 may be a transceiver and a communication interface. The processing unit 602 may be a processor. When the communication apparatus 600 is a module (for example, a chip) in a communication device, the communication unit 601 may be an input/output interface, an input/output circuit, an input/output pin, or the like, and may also be referred to as an interface, a communication interface, an interface circuit, or the like; and the processing unit 602 may be a processor, a processing circuit, a logic circuit, or the like.

In an implementation, the communication apparatus 600 may be used in the network device in Embodiment 1 shown in FIG. 2, and the network device is a network device used in a non-terrestrial network NTN. The processing unit 602 is configured to:
send first information by using the communication unit 601, where the first information indicates a terminal device type whose access is allowed by the network device, and the terminal device type whose access is allowed by the network device includes a fixed-terminal-device type and/or a mobile-terminal-device type.

Optionally, when sending the first information by using the communication unit 601, the processing unit 602 is configured to:
broadcast the first information by using the communication unit 601.

Optionally, the mobile-terminal-device type includes a plurality of mobile terminal device subtypes; and
when the terminal device type whose access is allowed by the network device includes the mobile-terminal-device type, the first information further indicates at least one mobile terminal device subtype whose access is allowed by the network device.

Optionally, the mobile-terminal-device type is an earth station in motion ESIM, and the plurality of mobile terminal device subtypes are: an aeronautical ESIM, a maritime ESIM, and a land ESIM.

Optionally, when the terminal device type whose access is allowed by the network device includes the fixed-terminal-device type, the first information further indicates that a determining condition of the fixed-terminal-device type is satisfied.

Optionally, the determining condition includes any one of the following:

A location of a terminal device is fixed;
a terminal device moves within a specified geographical range;
a terminal device moves at a specified quantity of geographical locations; or
a terminal device moves at a specified quantity of geographical locations, and a distance between any two geographical locations in the specified quantity of geographical locations is less than a specified distance threshold.

Optionally, the fixed-terminal-device type is a fixed-satellite service FSS terminal device.

Optionally, the first information further indicates a service whose implementation is allowed by the network device.

Optionally, the processing unit 602 is further configured to:
receive a radio resource control RRC connection setup request message from a first terminal device by using the communication unit 601, where the RRC connection setup request message includes at least one of the following: second information or third information, the second information indicates a type of the first terminal device, the third information indicates an antenna configuration of the first terminal device, and the type of the first terminal device is the fixed-terminal-device type or the mobile-terminal-device type; and
send an RRC connection setup complete message to the first terminal device by using the communication unit 601.

Optionally, when the RRC connection setup request message includes the third information, the processing unit 602 is further configured to:
determine, based on the third information, beam information of the first terminal device and/or information about a service serviceable for the first terminal device.

Optionally, the antenna configuration of the first terminal device includes at least one of the following:
an antenna type of an uplink antenna of the first terminal device and/or an antenna type of a downlink antenna of the first terminal device; or
a beam adjustment capability of the first terminal device.

Optionally, the processing unit 602 is further configured to:
receive a radio resource control RRC connection setup request message from a first terminal device by using the communication unit 601, where the RRC connection setup request message includes second information, the second information indicates a type of the first terminal device, and the type of the first terminal device is the fixed-terminal-device type or the mobile-terminal-device type; and
before an RRC connection setup complete message is sent to the first terminal device by using the communication unit 601, the following step is performed:
   determining that a type switching frequency of the first terminal device is less than a specified frequency threshold;
   when the type of the first terminal device is the fixed-terminal-device type, determining, based on location information of the first terminal device, duration in which the first terminal device is of the fixed-terminal-device type, and determining that the duration is greater than a specified duration threshold; or determining, based on location information of the first terminal device, that the first terminal device satisfies the determining condition of the fixed-terminal-device type; or
   when the type of the first terminal device is the mobile-terminal-device type, and the second information further indicates a mobile terminal device subtype of the first terminal device, determining that the at least one mobile terminal device subtype whose access is allowed by the network device includes the mobile terminal device subtype of the first terminal device, where the mobile-terminal-device type includes the plurality of mobile terminal device subtypes.

Optionally, the second information further indicates a service to be implemented by the first terminal device.

Optionally, the processing unit 602 is further configured to:
broadcast fourth information by using the communication unit 601, where the fourth information indicates an operating orbit type or operating location information of the network device.

Optionally, the processing unit 602 is further configured to:
send, by using the communication unit 601, measurement configuration information to a second terminal device that has accessed the network device, where the measurement configuration information includes at least one to-be-measured frequency, and any to-be-measured frequency corresponds to one operating orbit type or one piece of operating location information.

Optionally, the network device is a geostationary earth orbit GEO satellite, a highly elliptical orbit HEO satellite, a medium earth orbit MEO satellite, or a low earth orbit LEO satellite.

In an implementation, the communication apparatus 600 may be used in the first terminal device in Embodiment 1 shown in FIG. 2. The processing unit 602 is configured to:
receive first information from a network device by using the communication unit 601, where the first information indicates a terminal device type whose access is allowed by the network device, and the terminal device type whose access is allowed by the network device includes a fixed-terminal-device type and/or a mobile-terminal-device type; and
based on the first information, initiate an access procedure to the network device, or start a cell reselection procedure.

Optionally, when receiving the first information from the network device by using the communication unit 601, the processing unit 602 is configured to:
receive, by using the communication unit 601, the first information broadcast by the network device.

Optionally, when based on the first information, initiating the access procedure to the network device, or starting the cell reselection procedure, the processing unit 602 is configured to:
initiate the access procedure to the network device when the terminal device type whose access is allowed by the network device includes a type of the first terminal device; or
start the cell reselection procedure when the terminal device type whose access is allowed by the network device does not include a type of the first terminal device.

Optionally, the mobile-terminal-device type includes a plurality of mobile terminal device subtypes;
when the terminal device type whose access is allowed by the network device includes the mobile-terminal-device type, the first information further indicates at least one mobile terminal device subtype whose access is allowed by the network device;
the processing unit 602 is configured to:
   when the type of the first terminal device is the mobile-terminal-device type, initiate the access procedure to the network device when the terminal device type whose access is allowed by the network device includes the mobile-terminal-device type, and the at least one mobile terminal device subtype whose access is allowed by the network device includes a mobile terminal device subtype of the first terminal device; and
   the processing unit 602 is further configured to:
      when the type of the first terminal device is the mobile-terminal-device type, start the cell reselection procedure when the terminal device type whose access is allowed by the network device includes the mobile-terminal-device type, and the at least one mobile terminal device subtype whose access is allowed by the network device does not include a mobile terminal device subtype of the first terminal device.

Optionally, the mobile-terminal-device type is an earth station in motion ESIM, and the plurality of mobile terminal device subtypes are: an aeronautical ESIM, a maritime ESIM, and a land ESIM.

Optionally, when the terminal device type whose access is allowed by the network device includes the fixed-terminal-device type, the first information further indicates that a determining condition of the fixed-terminal-device type is satisfied; and
the processing unit 602 is configured to:
when the type of the first terminal device is the fixed-terminal-device type, initiate the access procedure to the network device when the terminal device type whose access is allowed by the network device includes the fixed-terminal-device type, and the first terminal device satisfies the determining condition; and
when the type of the first terminal device is the fixed-terminal-device type, start the cell reselection procedure when the terminal device type whose access is allowed by the network device includes the fixed-terminal-device type, and the first terminal device does not satisfy the determining condition.

Optionally, the determining condition includes any one of the following:

A location of a terminal device is fixed;
a terminal device moves within a specified geographical range;
a terminal device moves at a specified quantity of geographical locations; or
a terminal device moves at a specified quantity of geographical locations, and a distance between any two geographical locations in the specified quantity of geographical locations is less than a specified distance threshold.

Optionally, the fixed-terminal-device type is a fixed-satellite service FSS terminal device.

Optionally, the first information further indicates a service whose implementation is allowed by the network device; and the processing unit 602 is configured to:
initiate the access procedure to the network device when the service whose implementation is allowed by the network device includes a service to be implemented by the first terminal device; or
start the cell reselection procedure when the service whose implementation is allowed by the network device does not include a service to be implemented by the first terminal device.

Optionally, the processing unit 602 is further configured to:
after initiating the access procedure to the network device, send an RRC connection setup request message to the network device by using the communication unit 601, where the RRC connection setup request message includes at least one of the following: second information or third information, the second information indicates the type of the first terminal device, the third information indicates an antenna configuration of the first terminal device, and the type of the first terminal device is the fixed-terminal-device type or the mobile-terminal-device type; and
by using the communication unit 601, receive an RRC connection setup complete message from the network device, or receive an RRC connection reject message from the network device.

Optionally, the antenna configuration of the first terminal device includes at least one of the following:
an antenna type of an uplink antenna of the first terminal device and/or an antenna type of a downlink antenna of the first terminal device; or
a beam adjustment capability of the first terminal device.

Optionally, the second information further indicates the service to be implemented by the first terminal device.

Optionally, when initiating the access procedure to the network device based on the first information, the processing unit 602 is configured to:
receive, by using the communication unit 601, fourth information broadcast by the network device, where the fourth information indicates an operating orbit type or operating location information of the network device; and
initiate the access procedure to the network device based on the first information and the fourth information.

Optionally, the processing unit 602 is further configured to:
after accessing the network device, receive measurement configuration information from the network device by using the communication unit 601, where the measurement configuration information includes at least one to-be-measured frequency, and any to-be-measured frequency corresponds to one operating orbit type or one piece of operating location information;
select, from the at least one to-be-measured frequency based on the antenna configuration of the first terminal device, a target frequency corresponding to a target operating orbit type or target operating location information; and
perform cell measurement on a neighboring cell on the target frequency; or
select a neighboring cell on the target frequency as a target cell to perform cell switching or cell reselection.

In an implementation, the communication apparatus 600 may be used in the network device in Embodiment 2 shown in FIG. 3, and the network device is a network device used in a non-terrestrial network NTN. The processing unit 602 is configured to:
receive an RRC connection setup request message from a first terminal device by using the communication unit 601, where the RRC connection setup request message includes at least one of the following: first information or second information, the first information indicates a type of the first terminal device, the second information indicates an antenna configuration of the first terminal device, and the type of the first terminal device is a fixed-terminal-device type or a mobile-terminal-device type; and
send an RRC connection setup complete message to the terminal device by using the communication unit 601.

Optionally, when the RRC connection setup request message includes the first information, a terminal device type whose access is allowed by the network device includes the type of the first terminal device.

Optionally, when the RRC connection setup request message includes the first information, the processing unit 602 is further configured to:
determine that a type switching frequency of the first terminal device is less than a specified frequency threshold;
when the type of the first terminal device is the fixed-terminal-device type, determine, based on location information of the terminal device, duration in which the first terminal device is of the fixed-terminal-device type, and determine that the duration is greater than a specified duration threshold; or determine, based on location information of the first terminal device, that the first terminal device satisfies a determining condition of the fixed-terminal-device type; or
when the type of the first terminal device is the mobile-terminal-device type, and the first information further indicates a mobile terminal device subtype of the first terminal device, determine that at least one mobile terminal device subtype whose access is allowed by the network device includes the mobile terminal device subtype of the first terminal device, where the mobile-terminal-device type includes a plurality of mobile terminal device subtypes.

Optionally, the mobile-terminal-device type is an earth station in motion ESIM, and the plurality of mobile terminal device subtypes are: an aeronautical ESIM, a maritime ESIM, and a land ESIM.

Optionally, the determining condition includes:

A location of a terminal device is fixed;
a terminal device moves within a specified geographical range;
a terminal device moves at a specified quantity of geographical locations; or
a terminal device moves at a specified quantity of geographical locations, and a distance between any two geographical locations in the specified quantity of geographical locations is less than a specified distance threshold.

Optionally, the fixed-terminal-device type is a fixed-satellite service FSS terminal device.

Optionally, when the RRC connection setup request message includes the second information, the processing unit 602 is further configured to:
determine, based on the second information, beam scheduling information of the first terminal device and/or information about a service serviceable for the first terminal device.

Optionally, the antenna configuration of the first terminal device includes at least one of the following:
an antenna type of an uplink antenna of the first terminal device and/or an antenna type of a downlink antenna of the first terminal device; or
a beam adjustment capability of the first terminal device.

Optionally, when the RRC connection setup request message includes the first information, the first information further indicates a service to be implemented by the first terminal device, and a service whose implementation is allowed by the network device includes the service to be implemented by the first terminal device.

Optionally, the processing unit 602 is further configured to:
broadcast third information by using the communication unit 601, where the third information indicates an operating orbit type or operating location information of the network device.

Optionally, the processing unit 602 is further configured to:
send measurement configuration information to the first terminal device by using the communication unit 601, where the measurement configuration information includes at least one to-be-measured frequency, and any to-be-measured frequency corresponds to one operating orbit type or one piece of operating location information.

Optionally, the network device is a geostationary earth orbit GEO satellite, a highly elliptical orbit HEO satellite, a medium earth orbit MEO satellite, or a low earth orbit LEO satellite.

In an implementation, the communication apparatus 600 may be used in the first terminal device in Embodiment 2 shown in FIG. 3. The processing unit 602 is configured to:
send an RRC connection setup request message to a network device by using the communication unit 601, where the RRC connection setup request message includes at least one of the following: first information or second information, the first information indicates a type of the first terminal device, the second information indicates an antenna configuration of the first terminal device, and the type of the first terminal device is a fixed-terminal-device type or a mobile-terminal-device type; and
receive an RRC connection setup complete message from the network device by using the communication unit 601, or receive an RRC connection reject message from the network device by using the communication unit 601.

Optionally, the mobile-terminal-device type includes a plurality of mobile terminal device subtypes; and
when the RRC connection setup request message includes the first information, and the type of the first terminal device is the mobile-terminal-device type, the first information further indicates a mobile terminal device subtype of the first terminal device.

Optionally, the mobile-terminal-device type is an earth station in motion ESIM, and the plurality of mobile terminal device subtypes are: an aeronautical ESIM, a maritime ESIM, and a land ESIM.

Optionally, the fixed-terminal-device type is a fixed-satellite service FSS terminal device.

Optionally, the antenna configuration of the first terminal device includes at least one of the following:
an antenna type of an uplink antenna of the first terminal device and/or an antenna type of a downlink antenna of the first terminal device; or
a beam adjustment capability of the first terminal device.

Optionally, when the RRC connection setup request message includes the first information, the first information further indicates a service to be implemented by the first terminal device.

Optionally, the processing unit 602 is further configured to:
receive, by using the communication unit 601, third information broadcast by the network device, where the third information indicates an operating orbit type or operating location information of the network device; and
initiate an access procedure to the network device based on the third information.

Optionally, the processing unit 602 is further configured to:
after receiving the RRC connection setup complete message from the network device by using the communication unit 601, receive measurement configuration information from the network device by using the communication unit 601, where the measurement configuration information includes at least one to-be-measured frequency, and any to-be-measured frequency corresponds to one operating orbit type or one piece of operating location information;
select, from the at least one to-be-measured frequency based on the antenna configuration of the first terminal device, a target frequency corresponding to a target operating orbit type or target operating location information; and
perform cell measurement on a neighboring cell on the target frequency; or
select a neighboring cell on the target frequency as a target cell to perform cell switching or cell reselection.

In an implementation, the communication apparatus 600 may be used in the network device in Embodiment 3 shown in FIG. 4, and the network device is a network device used in a non-terrestrial network NTN. The processing unit 602 is configured to:
send first information by using the communication unit 601, where the first information indicates an operating orbit type or operating location information of the network device.

The processing unit 602 is configured to:
send the first information through broadcast by using the communication unit 601.

In an implementation, the communication apparatus 600 may be used in the first terminal device in Embodiment 3 shown in FIG. 4. The processing unit 602 is configured to:
receive first information from a network device by using the communication unit 601, where the first information indicates an operating orbit type or operating location information of the network device; and
initiate an access procedure to the network based on the first information.

The processing unit 602 is configured to:
receive, by using the communication unit 601, the first information broadcast by the network device.

In an implementation, the communication apparatus 600 may be used in the network device in Embodiment 4 shown in FIG. 5, and the network device is a network device used in a non-terrestrial network NTN. The processing unit 602 is configured to:
send measurement configuration information to a first terminal device by using the communication unit 601, where the measurement configuration information includes at least one to-be-measured frequency, and any to-be-measured frequency corresponds to one operating orbit type or one piece of operating location information.

In an implementation, the communication apparatus 600 may be used in the first terminal device in Embodiment 4 shown in FIG. 5. The processing unit 602 is configured to:
receive measurement configuration information from a network device by using the communication unit 601, where the measurement configuration information includes at least one to-be-measured frequency, and any to-be-measured frequency corresponds to one operating orbit type or one piece of operating location information;
select, from the at least one to-be-measured frequency based on an antenna configuration of the first terminal device, a target frequency corresponding to a target operating orbit type or target operating location information; and
perform cell measurement on a neighboring cell on the target frequency; or
select a neighboring cell on the target frequency as a target cell to perform cell switching or cell reselection.

It should be noted that division into the modules in embodiments of this application is an example, and is merely logical function division. During actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the conventional technology, or all or a part of the technical solutions may be implemented in the form of a software product. The computer software product is stored in a storage medium, and includes several instructions for instructing a computer device (which may be a personal computer, a server, a network device, or the like) or a processor (processor) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

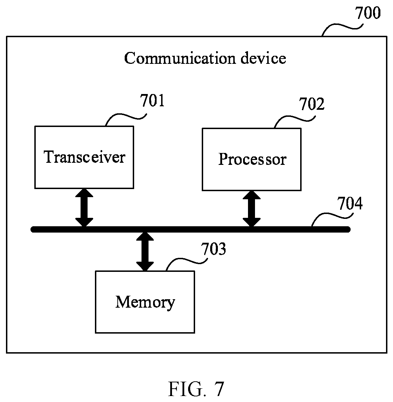

Based on the foregoing embodiments, an embodiment of this application further provides a communication device. The communication device is applicable to an NTN scenario, for example, may be the terminal device or the network device in the satellite systems shown in FIG. 1a to FIG. 1d. The communication device may implement the methods in the foregoing embodiments, and has a function of the communication apparatus 600. As shown in FIG. 7, the communication device 700 includes a transceiver 701, a processor 702, and a memory 703. The transceiver 701, the processor 702, and the memory 703 are connected to each other.

Optionally, the transceiver 701, the processor 702, and the memory 703 are connected to each other through a bus 704. The bus 704 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one bold line is used for representation in FIG. 7, but this does not mean that there is only one bus or one type of bus.

The transceiver 701 is configured to receive and send a signal, to implement communication with another device.

For a function of the processor 702, refer to the descriptions in the foregoing embodiments. Details are not described herein again.

The processor 702 may be a central processing unit (central processing unit, CPU), a network processor (network processor, NP), a combination of the CPU and the NP, or the like. The processor 702 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof. When implementing the foregoing function, the processor 702 may be implemented by hardware, or certainly may be implemented by hardware executing corresponding software. The steps in the methods disclosed with reference to the foregoing embodiments of this application may be directly performed and completed by the processor 702, or may be performed and completed by a combination of hardware and software modules in the processor 702.

The memory 703 is configured to store program instructions, data, and the like. Specifically, the program instructions may include program code. The program code includes computer operation instructions. The memory 703 may include a volatile memory (volatile memory), for example, a random access memory (random access memory, RAM), or may further include a non-volatile memory (non-volatile memory), for example, at least one magnetic disk memory, a hard disk drive (hard disk drive, HDD), or a solid-state drive (solid-state drive, SSD). Alternatively, the memory 703 may be any other medium that can be configured to carry or store program code in a form of instructions or a data structure and that can be accessed by a computer. This is not limited in this application. The processor 702 executes the program instructions stored in the memory 703, to implement the foregoing function, thereby implementing the methods provided in the foregoing embodiments.

Based on the foregoing embodiments, an embodiment of this application further provides a communication system. The communication system includes a terminal device and a network device. The terminal device is configured to implement the steps performed by the terminal device (namely, the first terminal device) in the methods provided in the foregoing embodiments. The network device is configured to implement the steps performed by the network device in the methods provided in the foregoing embodiments.

Based on the foregoing embodiments, an embodiment of this application further provides a computer program product. The computer program product includes a computer program. When the computer program is run on a computer, the computer is caused to perform the methods provided in the foregoing embodiments.

Based on the foregoing embodiments, an embodiment of this application further provides a computer-readable storage medium. The computer-readable storage medium stores a computer program. When the computer program is executed by a computer, the computer is caused to perform the methods provided in the foregoing embodiments.

Optionally, the computer may include but is not limited to a communication device like a terminal device or a network device.

The storage medium may be any usable medium that can be accessed by the computer. By way of example but not limitation, the computer-readable medium may include a RAM, a ROM, an electrically erasable programmable read-only memory (electrically erasable programmable read-only memory, EEPROM), a compact disc read-only memory (compact disc read-only memory, CD-ROM) or another compact disc storage, a magnetic disk storage medium or another magnetic storage device, or any other medium that can be for carrying or storing expected program code in a form of instructions or a data structure and that can be accessed by the computer.

Based on the foregoing embodiments, an embodiment of this application further provides a chip. The chip is configured to read a computer program stored in a memory, to implement the methods provided in the foregoing embodiments. Optionally, the chip may include a processor. The processor is coupled to the memory, and is configured to read the computer program stored in the memory, to implement the methods provided in the foregoing embodiments. Optionally, the chip may further include components such as a memory, a communication interface, and a power supply module. The memory is configured to store a computer program, the communication interface is configured to receive and send data, and the power supply module is configured to supply power to the processor.

Based on the foregoing embodiments, an embodiment of this application provides a chip system. The chip system includes a processor, configured to support a computer apparatus in implementing a function related to the terminal device in the foregoing embodiments. In a possible design, the chip system further includes a memory. The memory is configured to store a program and data that are necessary for the computer apparatus. The chip system may include a chip, or may include the chip and another discrete device.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or block in the flowcharts and/or the block diagrams and a combination of procedures and/or blocks in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a function specified in one or more procedures in the flowcharts and/or in one or more blocks in the block diagrams.

These computer program instructions may alternatively be stored in a computer-readable memory that can guide a computer or another programmable data processing device to work in a specific manner, so that the instructions stored in the computer-readable memory generate an artifact that includes an instruction apparatus. The instruction apparatus implements a function specified in one or more procedures in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. In this way, the instructions executed on the computer or the another programmable device provide steps for implementing a function specified in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that these modifications and variations fall within the scope of the claims of this application and their equivalent technologies.

## Claims

1. A communication method, comprising:
sending first information, wherein the first information indicates a terminal device type whose access is allowed by a network device, the terminal device type whose access is allowed by the network device comprises a fixed-terminal-device type and/or a mobile-terminal-device type, and the network device is a network device used in a non-terrestrial network NTN.

2. The method according to claim 1, wherein sending the first information comprises:
broadcasting the first information.

3. The method according to claim 1 or 2, wherein the mobile-terminal-device type comprises a plurality of mobile terminal device subtypes; and
when the terminal device type whose access is allowed by the network device comprises the mobile-terminal-device type, the first information further indicates at least one mobile terminal device subtype whose access is allowed by the network device.

4. The method according to claim 3, wherein the mobile-terminal-device type is an earth station in motion ESIM, and the plurality of mobile terminal device subtypes are: an aeronautical ESIM, a maritime ESIM, and a land ESIM.

5. The method according to any one of claims 1 to 4, wherein when the terminal device type whose access is allowed by the network device comprises the fixed-terminal-device type, the first information further indicates that a determining condition of the fixed-terminal-device type is satisfied.

6. The method according to claim 5, wherein the determining condition comprises any one of the following:
a location of a terminal device is fixed;
a terminal device moves within a specified geographical range;
a terminal device moves at a specified quantity of geographical locations; or
a terminal device moves at a specified quantity of geographical locations, and a distance between any two geographical locations in the specified quantity of geographical locations is less than a specified distance threshold.

7. The method according to any one of claims 1 to 6, wherein the fixed-terminal-device type is a fixed-satellite service FSS terminal device.

8. The method according to any one of claims 1 to 7, wherein the first information further indicates a service whose implementation is allowed by the network device.

9. The method according to any one of claims 1 to 8, wherein the method further comprises:
receiving a radio resource control RRC connection setup request message from a first terminal device, wherein the RRC connection setup request message comprises at least one of the following: second information or third information, the second information indicates a type of the first terminal device, the third information indicates an antenna configuration of the first terminal device, and the type of the first terminal device is the fixed-terminal-device type or the mobile-terminal-device type; and
sending an RRC connection setup complete message to the first terminal device.

10. The method according to claim 9, wherein when the RRC connection setup request message comprises the third information, the method further comprises:
determining, based on the third information, beam information of the first terminal device and/or information about a service serviceable for the first terminal device.

11. The method according to claim 9 or 10, wherein the antenna configuration of the first terminal device comprises at least one of the following:
an antenna type of an uplink antenna of the first terminal device and/or an antenna type of a downlink antenna of the first terminal device; or
a beam adjustment capability of the first terminal device.

12. The method according to any one of claims 1 to 8, wherein the method further comprises:
receiving a radio resource control RRC connection setup request message from a first terminal device, wherein the RRC connection setup request message comprises second information, the second information indicates a type of the first terminal device, and the type of the first terminal device is the fixed-terminal-device type or the mobile-terminal-device type; and
before an RRC connection setup complete message is sent to the first terminal device, the method further comprises:
determining that a type switching frequency of the first terminal device is less than a specified frequency threshold;
when the type of the first terminal device is the fixed-terminal-device type, determining, based on location information of the first terminal device, duration in which the first terminal device is of the fixed-terminal-device type, and determining that the duration is greater than a specified duration threshold; or determining, based on location information of the first terminal device, that the first terminal device satisfies the determining condition of the fixed-terminal-device type; or
when the type of the first terminal device is the mobile-terminal-device type, and the second information further indicates a mobile terminal device subtype of the first terminal device, determining that the at least one mobile terminal device subtype whose access is allowed by the network device comprises the mobile terminal device subtype of the first terminal device, wherein the mobile-terminal-device type comprises the plurality of mobile terminal device subtypes.

13. The method according to any one of claims 10 to 12, wherein the second information further indicates a service to be implemented by the first terminal device.

14. The method according to any one of claims 1 to 13, wherein the method further comprises:
broadcasting fourth information, wherein the fourth information indicates an operating orbit type or operating location information of the network device.

15. The method according to any one of claims 1 to 14, wherein the method further comprises:
sending measurement configuration information to a second terminal device that has accessed the network device, wherein the measurement configuration information comprises at least one to-be-measured frequency, and any to-be-measured frequency corresponds to one operating orbit type or one piece of operating location information.

16. The method according to any one of claims 1 to 15, wherein the network device is a geostationary earth orbit GEO satellite, a highly elliptical orbit HEO satellite, a medium earth orbit MEO satellite, or a low earth orbit LEO satellite.

17. A communication method, comprising:
receiving, by a terminal device, first information from a network device, wherein the first information indicates a terminal device type whose access is allowed by the network device, and the terminal device type whose access is allowed by the network device comprises a fixed-terminal-device type and/or a mobile-terminal-device type; and
based on the first information, initiating, by the terminal device, an access procedure to the network device, or starting a cell reselection procedure.

18. The method according to claim 17, wherein receiving, by the terminal device, the first information from the network device comprises:
receiving, by the terminal device, the first information broadcast by the network device.

19. The method according to claim 17 or 18, wherein based on the first information, initiating, by the terminal device, the access procedure to the network device, or starting the cell reselection procedure comprises:
initiating the access procedure to the network device when the terminal device type whose access is allowed by the network device comprises a type of the terminal device; or
starting the cell reselection procedure when the terminal device type whose access is allowed by the network device does not comprise a type of the terminal device.

20. The method according to claim 19, wherein the mobile-terminal-device type comprises a plurality of mobile terminal device subtypes;
when the terminal device type whose access is allowed by the network device comprises the mobile-terminal-device type, the first information further indicates at least one mobile terminal device subtype whose access is allowed by the network device;
initiating the access procedure to the network device when the terminal device type whose access is allowed by the network device comprises the type of the terminal device comprises:
when the type of the terminal device is the mobile-terminal-device type, initiating the access procedure to the network device when the terminal device type whose access is allowed by the network device comprises the mobile-terminal-device type, and the at least one mobile terminal device subtype whose access is allowed by the network device comprises a mobile terminal device subtype of the terminal device; and
the method further comprises:
when the type of the terminal device is the mobile-terminal-device type, starting the cell reselection procedure when the terminal device type whose access is allowed by the network device comprises the mobile-terminal-device type, and the at least one mobile terminal device subtype whose access is allowed by the network device does not comprise a mobile terminal device subtype of the terminal device.

21. The method according to claim 20, wherein the mobile-terminal-device type is an earth station in motion ESIM, and the plurality of mobile terminal device subtypes are: an aeronautical ESIM, a maritime ESIM, and a land ESIM.

22. The method according to any one of claims 17 to 21, wherein when the terminal device type whose access is allowed by the network device comprises the fixed-terminal-device type, the first information further indicates that a determining condition of the fixed-terminal-device type is satisfied; and
when the terminal device type whose access is allowed by the network device comprises the type of the terminal device, based on the first information, initiating the access procedure to the network device, or starting the cell reselection procedure comprises:
when the type of the terminal device is the fixed-terminal-device type, initiating the access procedure to the network device when the terminal device type whose access is allowed by the network device comprises the fixed-terminal-device type, and the terminal device satisfies the determining condition; and
when the type of the terminal device is the fixed-terminal-device type, starting the cell reselection procedure when the terminal device type whose access is allowed by the network device comprises the fixed-terminal-device type, and the terminal device does not satisfy the determining condition.

23. The method according to claim 22, wherein the determining condition comprises any one of the following:
a location of the terminal device is fixed;
the terminal device moves within a specified geographical range;
the terminal device moves at a specified quantity of geographical locations; or
the terminal device moves at a specified quantity of geographical locations, and a distance between any two geographical locations in the specified quantity of geographical locations is less than a specified distance threshold.

24. The method according to any one of claims 17 to 23, wherein the fixed-terminal-device type is a fixed-satellite service FSS terminal device.

25. The method according to any one of claims 17 to 24, wherein the first information further indicates a service whose implementation is allowed by the network device; and
based on the first information, initiating the access procedure to the network device, or starting the cell reselection procedure comprises:
initiating the access procedure to the network device when the service whose implementation is allowed by the network device comprises a service to be implemented by the terminal device; or
starting the cell reselection procedure when the service whose implementation is allowed by the network device does not comprise a service to be implemented by the terminal device.

26. The method according to any one of claims 17 to 25, wherein after initiating the access procedure to the network device, the method further comprises:
sending an RRC connection setup request message to the network device, wherein the RRC connection setup request message comprises at least one of the following: second information or third information, the second information indicates the type of the terminal device, the third information indicates an antenna configuration of the terminal device, and the type of the terminal device is the fixed-terminal-device type or the mobile-terminal-device type; and
receiving an RRC connection setup complete message from the network device, or receiving an RRC connection reject message from the network device.

27. The method according to claim 26, wherein the antenna configuration of the terminal device comprises at least one of the following:
an antenna type of an uplink antenna of the terminal device and/or an antenna type of a downlink antenna of the terminal device; or
a beam adjustment capability of the terminal device.

28. The method according to claim 26 or 27, wherein the second information further indicates the service to be implemented by the terminal device.

29. The method according to any one of claims 17 to 28, wherein based on the first information, initiating the access procedure to the network device comprises:
receiving fourth information broadcast by the network device, wherein the fourth information indicates an operating orbit type or operating location information of the network device; and
initiating the access procedure to the network device based on the first information and the fourth information.

30. The method according to any one of claims 17 to 29, wherein the method further comprises:
after accessing the network device, receiving measurement configuration information from the network device, wherein the measurement configuration information comprises at least one to-be-measured frequency, and any to-be-measured frequency corresponds to one operating orbit type or one piece of operating location information;
selecting, from the at least one to-be-measured frequency based on the antenna configuration of the terminal device, a target frequency corresponding to a target operating orbit type or target operating location information; and
performing cell measurement on a neighboring cell on the target frequency; or
selecting a neighboring cell on the target frequency as a target cell to perform cell switching or cell reselection.

31. A communication method, comprising:
receiving, by a network device, a radio resource control RRC connection setup request message from a first terminal device, wherein the RRC connection setup request message comprises at least one of the following: first information or second information, the first information indicates a type of the first terminal device, the second information indicates an antenna configuration of the first terminal device, and the type of the first terminal device is a fixed-terminal-device type or a mobile-terminal-device type; and
sending, by the network device, an RRC connection setup complete message to the terminal device.

32. The method according to claim 31, wherein when the RRC connection setup request message comprises the first information, a terminal device type whose access is allowed by the network device comprises the type of the first terminal device.

33. The method according to claim 31 or 32, wherein when the RRC connection setup request message comprises the first information, before sending, by the network device, the RRC connection setup complete message to the terminal device, the method further comprises:
determining that a type switching frequency of the first terminal device is less than a specified frequency threshold;
when the type of the first terminal device is the fixed-terminal-device type, determining, based on location information of the terminal device, duration in which the first terminal device is of the fixed-terminal-device type, and determining that the duration is greater than a specified duration threshold; or determining, based on location information of the first terminal device, that the first terminal device satisfies a determining condition of the fixed-terminal-device type; or
when the type of the first terminal device is the mobile-terminal-device type, and the first information further indicates a mobile terminal device subtype of the first terminal device, determining that at least one mobile terminal device subtype whose access is allowed by the network device comprises the mobile terminal device subtype of the first terminal device, wherein the mobile-terminal-device type comprises a plurality of mobile terminal device subtypes.

34. The method according to claim 33, wherein the mobile-terminal-device type is an earth station in motion ESIM, and the plurality of mobile terminal device subtypes are: an aeronautical ESIM, a maritime ESIM, and a land ESIM.

35. The method according to claim 33 or 34, wherein the determining condition comprises:
a location of a terminal device is fixed;
a terminal device moves within a specified geographical range;
a terminal device moves at a specified quantity of geographical locations; or
a terminal device moves at a specified quantity of geographical locations, and a distance between any two geographical locations in the specified quantity of geographical locations is less than a specified distance threshold.

36. The method according to any one of claims 31 to 35, wherein the fixed-terminal-device type is a fixed-satellite service FSS terminal device.

37. The method according to any one of claims 31 to 36, wherein when the RRC connection setup request message comprises the second information, the method further comprises:
determining, based on the second information, beam scheduling information of the first terminal device and/or information about a service serviceable for the first terminal device.

38. The method according to any one of claims 31 to 37, wherein the antenna configuration of the first terminal device comprises at least one of the following:
an antenna type of an uplink antenna of the first terminal device and/or an antenna type of a downlink antenna of the first terminal device; or
a beam adjustment capability of the first terminal device.

39. The method according to any one of claims 31 to 38, wherein when the RRC connection setup request message comprises the first information, the first information further indicates a service to be implemented by the first terminal device, and a service whose implementation is allowed by the network device comprises the service to be implemented by the first terminal device.

40. The method according to any one of claims 31 to 39, wherein the method further comprises:
broadcasting, by the network device, third information, wherein the third information indicates an operating orbit type or operating location information of the network device.

41. The method according to any one of claims 31 to 40, wherein the method further comprises:
sending, by the network device, measurement configuration information to the first terminal device, wherein the measurement configuration information comprises at least one to-be-measured frequency, and any to-be-measured frequency corresponds to one operating orbit type or one piece of operating location information.

42. The method according to any one of claims 31 to 41, wherein the network device is a geostationary earth orbit GEO satellite, a highly elliptical orbit HEO satellite, a medium earth orbit MEO satellite, or a low earth orbit LEO satellite.

43. A communication method, comprising:
sending, by a first terminal device, a radio resource control RRC connection setup request message to a network device, wherein the RRC connection setup request message comprises at least one of the following: first information or second information, the first information indicates a type of the first terminal device, the second information indicates an antenna configuration of the first terminal device, and the type of the first terminal device is a fixed-terminal-device type or a mobile-terminal-device type; and
receiving, by the first terminal device, an RRC connection setup complete message from the network device, or receiving an RRC connection reject message from the network device.

44. The method according to claim 43, wherein the mobile-terminal-device type comprises a plurality of mobile terminal device subtypes; and
when the RRC connection setup request message comprises the first information, and the type of the first terminal device is the mobile-terminal-device type, the first information further indicates a mobile terminal device subtype of the first terminal device.

45. The method according to claim 44, wherein the mobile-terminal-device type is an earth station in motion ESIM, and the plurality of mobile terminal device subtypes are: an aeronautical ESIM, a maritime ESIM, and a land ESIM.

46. The method according to any one of claims 43 to 45, wherein the fixed-terminal-device type is a fixed-satellite service FSS terminal device.

47. The method according to any one of claims 43 to 46, wherein the antenna configuration of the first terminal device comprises at least one of the following:
an antenna type of an uplink antenna of the first terminal device and/or an antenna type of a downlink antenna of the first terminal device; or
a beam adjustment capability of the first terminal device.

48. The method according to any one of claims 43 to 47, wherein when the RRC connection setup request message comprises the first information, the first information further indicates a service to be implemented by the first terminal device.

49. The method according to any one of claims 43 to 48, wherein the method further comprises:
receiving, by the first terminal device, third information broadcast by the network device, wherein the third information indicates an operating orbit type or operating location information of the network device; and
initiating an access procedure to the network device based on the third information.

50. The method according to any one of claims 43 to 49, wherein after receiving the RRC connection setup complete message from the network device, the method further comprises:
receiving measurement configuration information from the network device, wherein the measurement configuration information comprises at least one to-be-measured frequency, and any to-be-measured frequency corresponds to one operating orbit type or one piece of operating location information;
selecting, from the at least one to-be-measured frequency based on the antenna configuration of the first terminal device, a target frequency corresponding to a target operating orbit type or target operating location information; and
performing cell measurement on a neighboring cell on the target frequency; or
selecting a neighboring cell on the target frequency as a target cell to perform cell switching or cell reselection.

51. A communication method, comprising:
sending, by a network device, first information, wherein
the first information indicates an operating orbit type or operating location information of the network device.

52. The method according to claim 51, wherein the sending, by the network device, the first information comprises:
sending, by the network device, the first information through broadcast.

53. A communication method, comprising:
receiving, by a first terminal device, first information from a network device, wherein the first information indicates an operating orbit type or operating location information of the network device; and
initiating, by the first terminal device, an access procedure to the network device based on the first information.

54. The method according to claim 53, wherein the receiving, by the first terminal device, the first information from the network device comprises:
receiving, by the first terminal device, the first information broadcast by the network device.

55. A communication method, comprising:
sending, by a network device, measurement configuration information to a first terminal device, wherein the measurement configuration information comprises at least one to-be-measured frequency, and any to-be-measured frequency corresponds to one operating orbit type or one piece of operating location information.

56. A communication method, comprising:
receiving, by a first terminal device, measurement configuration information from a network device, wherein the measurement configuration information comprises at least one to-be-measured frequency, and any to-be-measured frequency corresponds to one operating orbit type or one piece of operating location information;
selecting, by the first terminal device from the at least one to-be-measured frequency based on an antenna configuration of the first terminal device, a target frequency corresponding to a target operating orbit type or target operating location information; and
performing, by the first terminal device, cell measurement on a neighboring cell on the target frequency; or selecting a neighboring cell on the target frequency as a target cell to perform cell switching or cell reselection.

57. A communication apparatus, comprising:
a communication unit, configured to receive and send data; and
a processing unit, configured to perform the method according to any one of claims 1 to 56.

58. A communication device, comprising:
a transceiver, configured to receive and send signals; and
a processor, configured to execute program instructions, to cause the communication device to perform the method according to any one of claims 1 to 56.

59. A communication device, comprising at least one processing element and at least one storage element, wherein
the at least one storage element is configured to store a computer program; and
the at least one processing element is configured to read the computer program in the at least one storage element, to perform the method according to any one of claims 1 to 56.

60. A communication system, comprising:
a network device configured to perform the method according to any one of claims 1 to 16, and a terminal device configured to perform the method according to any one of claims 17 to 30;
a network device configured to perform the method according to any one of claims 31 to 42, and a first terminal device configured to perform the method according to any one of claims 43 to 50;
a network device configured to perform the method according to claim 51 or 52, and a first terminal device configured to perform the method according to claim 53 or 54; or
a network device configured to perform the method according to claim 55, and a first terminal device configured to perform the method according to claim 56.

61. A computer-readable storage medium, wherein the computer-readable storage medium stores a computer program; and when the computer program is run on a computer, the computer is caused to perform the method according to any one of claims 1 to 56.

62. A chip, wherein the chip comprises a processor, the processor is coupled to a memory, and the processor is configured to read a computer program stored in the memory, to cause the chip to perform the method according to any one of claims 1 to 56.

63. A computer program product, wherein when the computer program product runs on a computer, the computer is caused to perform the method according to any one of claims 1 to 56.

64. A chip system, wherein the chip system comprises a processor and a memory, the memory is configured to store a computer program, and the processor is coupled to the processor, and is configured to read the computer program stored in the memory, to perform the method according to any one of claims 1 to 56.
